# EUROPEAN PATENT APPLICATION

(11) **EP 3 324 668 A1**
(43) Date of publication of application: **23.05.2018**
(21) Application number: 16832217.0
(22) Date of filing: 21.07.2016
(51) Int. Cl.: H04W 16/14

(54) **METHOD FOR ELIMINATING INTERFERENCE, USER EQUIPMENTS, AND BASE STATIONS**

(30) Priority: 31.07.2015 CN 201510465672
(71) Applicant: Huawei Technologies Co., Ltd., Longgang District Shenzhen, Guangdong 518129 (CN)
(72) Inventor: GUO, Fangfu, Shenzhen Guangdong 518129 (CN); ZHANG, Chi, Shenzhen Guangdong 518129 (CN)
(74) Representative: Isarpatent
(86) International application number: PCT/CN2016/090871
(87) International publication number: WO 2017/020729

(57) **Abstract**

Embodiments of the present invention disclose an interference cancellation method, user equipment, and a base station, so as to cancel interference between two neighboring user equipments without reducing transmit power of the user equipments or limiting scheduling flexibility. The method in the embodiments of the present invention includes: sending, by first user equipment UE, an ICCI to second UE by using a device-to-device D2D link, where the ICCI includes information about a configuration used for sending an uplink signal by the first UE; and sending, by the first UE after sending the ICCI, the uplink signal to a base station to which the first UE belongs, where the uplink signal sent by the first UE causes interference to receiving, by the second UE, of a downlink signal sent by a base station to which the second UE belongs.

## Description

This application claims priority to Chinese Patent Application No. 201510465672.4, filed with the Chinese Patent Office on July 31, 2015 and entitled "INTERFERENCE CANCELLATION METHOD, USER EQUIPMENT, AND BASE STATION", which is incorporated herein by reference in its entirety.

### TECHNICAL FIELD

The present invention relates to the field of communications technologies, and in particular, to an interference cancellation method, user equipment, and a base station.

### BACKGROUND

With development of wireless network technologies, various new services emerge in endlessly, and different services have different resource requirements. Therefore, this requires that limited resources can be more effectively used in a future wireless network. There are two technologies in the prior art for achieving the objective:
(1) One is a technical solution in which uplink and downlink subframes are flexibly configured in a time division duplex (English full name: Time Division Duplex, TDD for short) mode of a Long Term Evolution (English full name: Long Term Evolution, LTE for short) system. A network may flexibly adjust an uplink-downlink subframe configuration, for example, configure the uplink-downlink subframe configuration according to an uplink-downlink service requirement. The network may dynamically adjust the uplink-downlink subframe configuration according to uplink-downlink resource requirements of different services, so as to optimize resource utilization.
(2) The other one is an intra-frequency full-duplex technology. An LTE system in a TDD mode is a half-duplex system, and a network device cannot send and receive data at the same time. In an LTE system in a frequency division duplex (English full name: Frequency Division Duplex, FDD for short) mode, although the network device can perform sending and receiving at the same time, different frequency bands between which a separation distance is large enough are used for sending and receiving. Therefore, this feature in the LTE system belongs to inter-frequency full-duplex. In the intra-frequency full-duplex technology, the network device can send and receive data at a same frequency or at neighboring frequencies at the same time, so as to improve use efficiency of resources.

In an implementation process of the present invention, the inventor of the present invention finds that in the prior, although uplink and downlink subframes can be flexibly configured in the LTE system in the TDD mode, different uplink-downlink subframe configurations need to be separately performed in two neighboring cells. For example, at a moment, one cell is in an uplink subframe and schedules cell-edge user equipment (English full name: User Equipment, UE for short) 1 to send an uplink signal, and the other cell is in a downlink subframe and schedules cell-edge UE 2 relatively close to the UE 1 to receive a downlink signal. In this case, the uplink signal sent by the UE 1 severely interferes with receiving of the downlink signal by the UE 2. In the intra-frequency full-duplex technology in the prior art, if a base station has an intra-frequency full-duplex capability, the base station can send a downlink signal to the UE 2 relatively close to the UE 1 while receiving an uplink signal sent by the UE 1. In this case, the uplink signal sent by the UE 1 causes interference to receiving of the downlink signal by the UE 2.

In the prior art described above, an uplink signal sent by UE causes interference to receiving of a downlink signal by another UE. Therefore, how to cancel the interference becomes a problem that needs to be resolved. In the prior art, interference coordination or interference management may be performed by using a method in which a network side performs centralized scheduling control to cancel the interference between two neighboring UEs. There are mainly two methods for implementing interference coordination or interference management. One is a scheduling control-based interference coordination method. This requires that UEs that do not interfere with each other are selected and scheduled. For example, in the technical solution in which uplink and downlink subframes are flexibly configured in the LTE system in the TDD mode, when UE 1 sends an uplink signal to abase station 1, abase station 2 finds, during interference coordination scheduling, that if UE 2 is scheduled, the UE 2 is interfered with by the uplink signal sent by the UE 1. In this case, the base station 2 gives up scheduling of the UE 2 in a current scheduling period, and instead schedules UE 3 that is not interfered with by the uplink signal sent by the UE 1. The other one is a power control-based interference coordination method. Transmit power of UE needs to be controlled to avoid causing interference to receiving of a downlink signal by another UE. For example, transmit power of UE 1 is reduced to prevent an uplink signal sent by the UE 1 from interfering with receiving of a downlink signal by UE 2.

It can be learned from the foregoing content that, in the scheduling control-based interference coordination method in the prior art, scheduling flexibility is limited and scheduling freedom is reduced. In the power control-based interference coordination method in the prior art, transmit power of UE is limited. In the method, although interference caused by UE with limited power to receiving of a downlink signal by another UE can be reduced, received quality, at a receive end, of a signal transmitted by the UE with reduced transmit power may not be ensured.

### SUMMARY

Embodiments of the present invention provide an interference cancellation method, user equipment, and a base station, so as to cancel interference between two neighboring user equipments without reducing transmit power of the user equipments or limiting scheduling flexibility.

To resolve the foregoing technical problem, the embodiments of the present invention provide the following technical solutions:

According to a first aspect, an embodiment of the present invention provides an interference cancellation method, including:
sending, by first user equipment UE, an ICCI to second UE by using a device-to-device D2D link, where the ICCI includes information about a configuration used for sending an uplink signal by the first UE; and
sending, by the first UE after sending the ICCI, the uplink signal to a base station to which the first UE belongs, where the uplink signal sent by the first UE causes interference to receiving, by the second UE, of a downlink signal sent by a base station to which the second UE belongs.

With reference to the first aspect, in a first possible implementation of the first aspect, before the sending, by first user equipment UE, an ICCI to second UE by using a device-to-device D2D link, the method further includes:
receiving, by the first UE by using the D2D link, a reference signal sent by the second UE;
measuring, by the first UE, the reference signal, and determining, according to an obtained measurement result, whether the interference caused by the uplink signal sent by the first UE to receiving, by the second UE, of the downlink signal sent by the base station to which the second UE belongs is greater than a preset interference level; and
if the interference caused by the uplink signal sent by the first UE to receiving, by the second UE, of the downlink signal sent by the base station to which the second UE belongs is greater than the preset interference level, triggering performing of the step of sending, by first user equipment UE, an ICCI to second UE by using a device-to-device D2D link.

With reference to the first aspect or the first possible implementation of the first aspect, in a second possible implementation of the first aspect, the sending, by first user equipment UE, an ICCI to second UE by using a device-to-device D2D link includes:
receiving, by the first UE, control information sent by the base station to which the first UE belongs; and
sending, by the first UE by using the D2D link, the ICCI to the second UE on an ICCI resource indicated by the control information.

With reference to the first aspect, in a third possible implementation of the first aspect, before the sending, by first user equipment UE, an ICCI to second UE by using a device-to-device D2D link, the method further includes:
sending, by the first UE, ICCI indication information on an indication information resource in an ICCI resource set broadcast by the base station to which the first UE belongs, where the ICCI indication information is used by the second UE to determine, according to whether the ICCI indication information is sent on the indication information resource, whether UE other than the second UE sends ICCI on an ICCI resource in the ICCI resource set.

According to a second aspect, an embodiment of the present invention provides an interference cancellation method, including:
receiving, by second user equipment UE by using a device-to-device D2D link, an ICCI sent by first UE, where the ICCI includes information about a configuration used for sending an uplink signal by the first UE;
receiving, by the second UE, a downlink signal sent by a base station to which the second UE belongs and an interference signal mixed in the downlink signal, where the interference signal is interference that is caused to the second UE when the first UE sends the uplink signal and that is received by the second UE when the second UE receives the downlink signal;
reconstructing, by the second UE according to the configuration information included in the ICCI, the interference that is caused to the second UE when the first UE sends the uplink signal, to obtain the interference signal; and
removing, by the second UE, the interference signal from the downlink signal mixed with the interference signal, to obtain an original downlink signal sent by the base station to which the second UE belongs.

With reference to the second aspect, in a first possible implementation of the second aspect, before the receiving, by second user equipment UE by using a device-to-device D2D link, an ICCI sent by first UE, the method further includes:
sending, by the second UE, a reference signal to the first UE by using the D2D link.

With reference to the second aspect, in a second possible implementation of the second aspect, the receiving, by second user equipment UE by using a device-to-device D2D link, an ICCI sent by first UE includes:
receiving, by the second UE, an ICCI resource set broadcast by the base station to which the second UE belongs; and
blindly detecting, by the second UE, ICCI carried on the D2D link on an ICCI resource in the ICCI resource set.

With reference to the second implementation of the second aspect, in a third possible implementation of the second aspect, after the receiving, by the second UE, an ICCI resource set broadcast by the base station to which the second UE belongs, the method further includes:
learning, by the second UE, whether an indication information resource in the ICCI resource set carries ICCI indication information; and
if the indication information resource does not carry the ICCI indication information, determining, by the second UE, that there is no need to blindly detect ICCI carried on the D2D link on an ICCI resource in the ICCI resource set; or if the indication information resource carries the ICCI indication information, triggering the second UE to perform the step of blindly detecting, by the second UE, ICCI carried on the D2D link on an ICCI resource in the ICCI resource set.

According to a third aspect, an embodiment of the present invention provides an interference cancellation method, including:
broadcasting, by a first base station, an message ICCI resource set of a cell in which the first base station is located, where the cell in which the first base station is located includes first user equipment UE and second UE; and
receiving, by the first base station, an uplink signal sent by the first UE, and sending, by the first base station, a downlink signal to the second UE, where the uplink signal sent by the first UE causes interference to receiving of the downlink signal by the second UE.

With reference to the third aspect, in a first possible implementation of the third aspect, before the broadcasting, by a first base station, an ICCI resource set of a cell in which the first base station is located, the method further includes:
configuring, by the first base station, an indication information resource in the ICCI resource set of the cell in which the first base station is located, where the indication information resource is used by the first UE to determine, according to whether to send ICCI, whether to send ICCI indication information on the indication information resource.

With reference to the third aspect, in a second possible implementation of the third aspect, the method further includes:
obtaining, by the first base station by interacting with a second base station, an ICCI resource set of a cell in which the second base station is located; and
broadcasting, by the first base station, the ICCI resource set of the cell in which the second base station is located, so that the second UE blindly detects whether UE included in the cell in which the second base station is located sends ICCI on an ICCI resource in the ICCI resource set of the cell in which the second base station is located.

According to a fourth aspect, an embodiment of the present invention provides an interference cancellation method, including:
obtaining, by a second base station by interacting with a first base station, an ICCI resource set of a cell in which the first base station is located, where the cell in which the first base station is located includes first user equipment UE, and a cell in which the second base station is located includes second UE;
broadcasting, by the second base station, the ICCI resource set of the cell in which the first base station is located; and
sending, by the second base station, a downlink signal to the second UE, where when receiving the downlink signal, the second UE receives interference caused to the second UE when the first UE sends an uplink signal.

With reference to the fourth aspect, in a first possible implementation of the fourth aspect, the obtaining, by a second base station by interacting with a first base station, an ICCI resource set of a cell in which the first base station is located includes:
obtaining, by the second base station by using an X2 interface between the second base station and the first base station, the ICCI resource set of the cell in which the first base station is located; or
obtaining, by the second base station by using a core network, the ICCI resource set of the cell in which the first base station is located.

With reference to the fourth aspect, in a second possible implementation of the fourth aspect, the method further includes:
broadcasting, by the second base station, an ICCI resource set of the cell in which the second base station is located, where the cell in which the second base station is located further includes third UE and fourth UE; and
receiving, by the second base station, an uplink signal sent by the third UE, and sending, by the second base station, a downlink signal to the fourth UE, where the uplink signal sent by the third UE causes interference to receiving of the downlink signal by the fourth UE.

With reference to the second possible implementation of the fourth aspect, in a third possible implementation of the fourth aspect, before the broadcasting, by the second base station, an ICCI resource set of the cell in which the second base station is located, the method further includes:
configuring, by the second base station, an indication information resource in the ICCI resource set of the cell in which the second base station is located, where the indication information resource is used by the third UE to determine, according to whether to send ICCI, whether to send ICCI indication information on the indication information resource.

According to a fifth aspect, an embodiment of the present invention provides user equipment UE, where the UE is specifically first UE, there is a device-to-device D2D link between the first UE and second UE, and the first UE includes:
an ICCI sending module, configured to send an ICCI to the second UE by using the D2D link, where the ICCI includes information about a configuration used for sending an uplink signal by the first UE; and
an uplink signal sending module, configured to: after the ICCI sending module sends the ICCI, send the uplink signal to a base station to which the first UE belongs, where the uplink signal sent by the first UE causes interference to receiving, by the second UE, of a downlink signal sent by a base station to which the second UE belongs.

With reference to the fifth aspect, in a first possible implementation of the fifth aspect, the first UE further includes a measurement module, configured to: before the ICCI sending module sends the ICCI to the second UE by using the device-to-device D2D link, receive, by using the D2D link, a reference signal sent by the second UE; measure the reference signal; determine, according to an obtained measurement result, whether the interference caused by the uplink signal sent by the first UE to receiving, by the second UE, of the downlink signal sent by the base station to which the second UE belongs is greater than a preset interference level; and trigger performing of the ICCI sending module if the interference caused by the uplink signal sent by the first UE to receiving, by the second UE, of the downlink signal sent by the base station to which the second UE belongs is greater than the preset interference level.

With reference to the fifth aspect or the first possible implementation of the fifth aspect, in a second possible implementation of the fifth aspect, the ICCI sending module includes:
a receiving submodule, configured to receive control information sent by the base station to which the first UE belongs; and
a sending submodule, configured to send, by using the D2D link, the ICCI to the second UE on an ICCI resource indicated by the control information.

With reference to the fifth aspect, in a third possible implementation of the fifth aspect, the ICCI sending module is further configured to: before sending the ICCI to the second UE by using the device-to-device D2D link, send ICCI indication information on an indication information resource in an ICCI resource set broadcast by the base station to which the first UE belongs, where the ICCI indication information is used by the second UE to determine, according to whether the ICCI indication information is sent on the indication information resource, whether UE other than the second UE sends ICCI on an ICCI resource in the ICCI resource set.

According to a sixth aspect, an embodiment of the present invention provides user equipment UE, where the UE is specifically second UE, there is a device-to-device D2D link between the second UE and first UE, and the second UE includes:
an ICCI receiving module, configured to receive, by using the D2D link, an ICCI sent by the first UE, where the ICCI includes information about a configuration used for sending an uplink signal by the first UE;
a signal receiving module, configured to receive a downlink signal sent by a base station to which the second UE belongs and an interference signal mixed in the downlink signal, where the interference signal is interference that is caused to the second UE when the first UE sends the uplink signal and that is received by the second UE when the second UE receives the downlink signal;
an interference reconstruction module, configured to reconstruct, according to the configuration information included in the ICCI, the interference that is caused to the second UE when the first UE sends the uplink signal, to obtain the interference signal; and
a signal restoration module, configured to remove the interference signal from the downlink signal mixed with the interference signal, to obtain an original downlink signal sent by the base station to which the second UE belongs.

With reference to the sixth aspect, in a first possible implementation of the sixth aspect, the second UE further includes a signal sending module, configured to: before the ICCI receiving module receives, by using the D2D link, the ICCI sent by the first UE, send a reference signal to the first UE by using the D2D link.

With reference to the sixth aspect, in a second possible implementation of the sixth aspect, the ICCI receiving module includes:
a receiving submodule, configured to receive an ICCI resource set broadcast by the base station to which the second UE belongs; and
a detection submodule, configured to blindly detect ICCI carried on the D2D link on an ICCI resource in the ICCI resource set.

With reference to the second possible implementation of the sixth aspect, in a third possible implementation of the sixth aspect, the ICCI receiving module further includes a learning submodule, configured to: after the receiving submodule receives the ICCI resource set broadcast by the base station to which the second UE belongs, learn whether an indication information resource in the ICCI resource set carries ICCI indication information; and if the indication information resource does not carry the ICCI indication information, determine that there is no need to blindly detect ICCI carried on the D2D link on an ICCI resource in the ICCI resource set; or trigger performing of the detection submodule if the indication information resource carries the ICCI indication information.

According to a seventh aspect, an embodiment of the present invention provides a base station, where the base station is a first base station, and the first base station includes:
a broadcast module, configured to broadcast an ICCI resource set of a cell in which the first base station is located, where the cell in which the first base station is located includes first user equipment UE and second UE;
a receiving module, configured to receive an uplink signal sent by the first UE; and
a sending module, configured to send a downlink signal to the second UE when the receiving module receives the uplink signal sent by the first UE, where the uplink signal sent by the first UE causes interference to receiving of the downlink signal by the second UE.

With reference to the seventh aspect, in a first possible implementation of the seventh aspect, the first base station further includes a configuration module, configured to: before the broadcast module broadcasts the ICCI resource set of the cell in which the first base station is located, configure an indication information resource in the ICCI resource set of the cell in which the first base station is located, where the indication information resource is used by the first UE to determine, according to whether to send ICCI, whether to send ICCI indication information on the indication information resource.

With reference to the seventh aspect, in a second possible implementation of the seventh aspect, the first base station further includes an interaction module;
the interaction module is configured to obtain, by interacting with a second base station, an ICCI resource set of a cell in which the second base station is located; and
the broadcast module is further configured to broadcast the ICCI resource set of the cell in which the second base station is located, so that the second UE blindly detects whether UE included in the cell in which the second base station is located sends ICCI on an ICCI resource in the ICCI resource set of the cell in which the second base station is located.

According to an eighth aspect, an embodiment of the present invention provides a base station, where the base station is specifically a second base station, and the second base station includes:
an interaction module, configured to obtain, by interacting with a first base station, an ICCI resource set of a cell in which the first base station is located, where the cell in which the first base station is located includes first user equipment UE, and a cell in which the second base station is located includes second UE;
a broadcast module, configured to broadcast the ICCI resource set of the cell in which the first base station is located; and
a sending module, configured to send a downlink signal to the second UE, where when receiving the downlink signal, the second UE receives interference caused to the second UE when the first UE sends an uplink signal.

With reference to the eighth aspect, in a first possible implementation of the eighth aspect, the interaction module is specifically configured to: obtain, by using an X2 interface between the second base station and the first base station, the ICCI resource set of the cell in which the first base station is located; or obtain, by using a core network, the ICCI resource set of the cell in which the first base station is located.

With reference to the eighth aspect, in a second possible implementation of the eighth aspect, the base station further includes a receiving module;
the broadcast module is further configured to broadcast an ICCI resource set of the cell in which the second base station is located, where the cell in which the second base station is located further includes third UE and fourth UE;
the receiving module is configured to receive an uplink signal sent by the third UE; and
the sending module is further configured to send a downlink signal to the fourth UE when the receiving module receives the uplink signal sent by the third UE, where the uplink signal sent by the third UE causes interference to receiving of the downlink signal by the fourth UE.

With reference to the second possible implementation of the eighth aspect, in a third possible implementation of the eighth aspect, the second base station further includes a configuration module, configured to: before the broadcast module broadcasts the ICCI resource set of the cell in which the second base station is located, configure an indication information resource in the ICCI resource set of the cell in which the second base station is located, where the indication information resource is used by the third UE to determine, according to whether to send ICCI, whether to send ICCI indication information on the indication information resource.

It can be learned from the foregoing technical solutions that the embodiments of the present invention have the following advantages:
In the embodiments of the present invention, the first UE sends the ICCI to the second UE by using the D2D link, and the ICCI includes the information about the configuration used for sending the uplink signal by the first UE. The second UE can receive, by using the D2D link, the ICCI sent by the first UE. After the first UE sends the ICCI, the first UE sends the uplink signal to the base station to which the first UE belongs, and the uplink signal sent by the first UE causes the interference to receiving, by the second UE, of the downlink signal sent by the base station to which the second UE belongs. The second UE receives the downlink signal and the interference signal mixed in the downlink signal, and then the second UE reconstructs, according to the configuration information included in the ICCI, the interference caused to the second UE when the first UE sends the uplink signal, to obtain the interference signal. The second UE removes the interference signal from the downlink signal mixed with the interference signal, to obtain the original downlink signal sent by the base station to which the second UE belongs. In the embodiments of the present invention, the second UE may reconstruct the interference signal according to the ICCI received from the first UE, and after reconstruction, the interference signal may be removed from the downlink signal mixed with the interference signal. Therefore, interference caused by an uplink signal sent by UE to receiving of a downlink signal by another UE may be cancelled. In the embodiments of the present invention, there is no need to limit receiving a downlink signal by the second UE serving as a receive end, or limit transmit power used when the first UE serves as a transmit end to send an uplink signal. Therefore, scheduling flexibility and freedom are not limited.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons skilled in the art may still derive other drawings from these accompanying drawings.

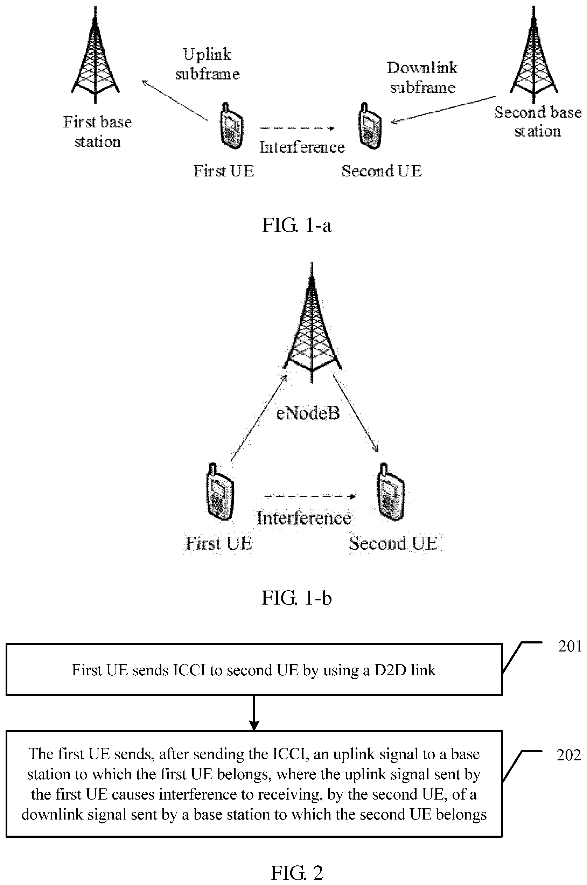

FIG. 1-a is a schematic architectural diagram of a system according to an embodiment of the present invention;
FIG. 1-b is a schematic architectural diagram of another system according to an embodiment of the present invention;
FIG. 2 is a schematic block flowchart of an interference cancellation method according to an embodiment of the present invention;
FIG. 3 is a schematic block flowchart of another interference cancellation method according to an embodiment of the present invention;
FIG. 4 is a schematic block flowchart of an interference cancellation method according to an embodiment of the present invention;
FIG. 5 is a schematic block flowchart of another interference cancellation method according to an embodiment of the present invention;
FIG. 6-a is a schematic diagram of a process of interaction between UE 1 and UE 2 in an intra-eNodeB scenario according to an embodiment of the present invention;

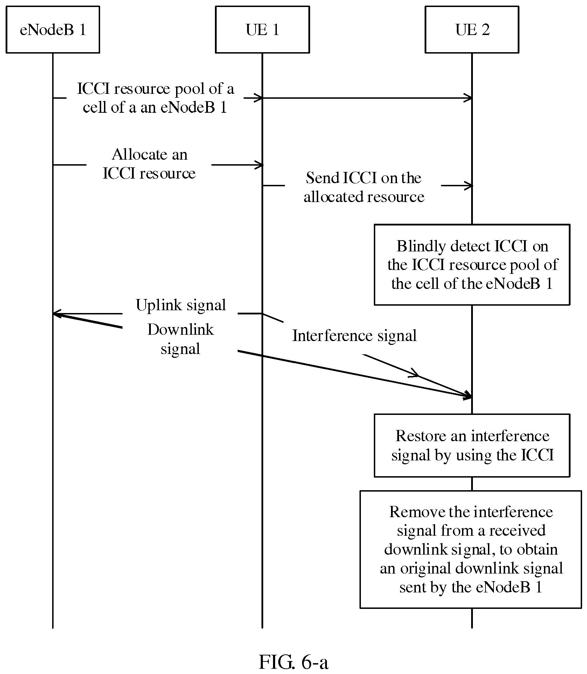

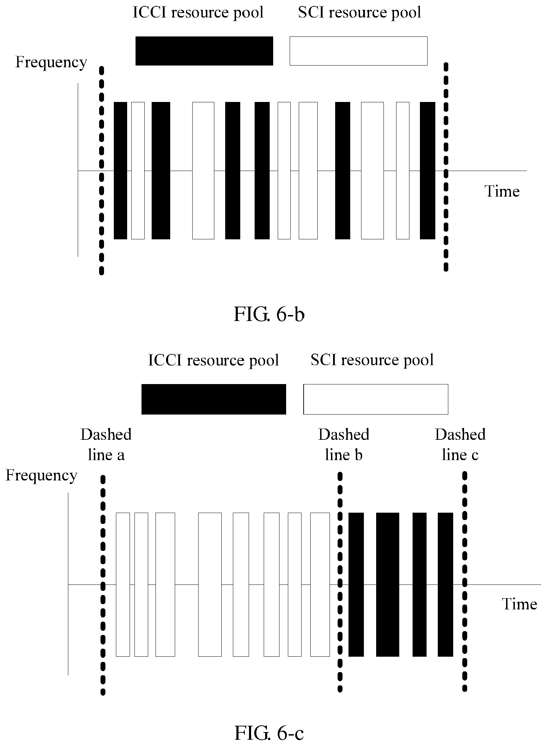

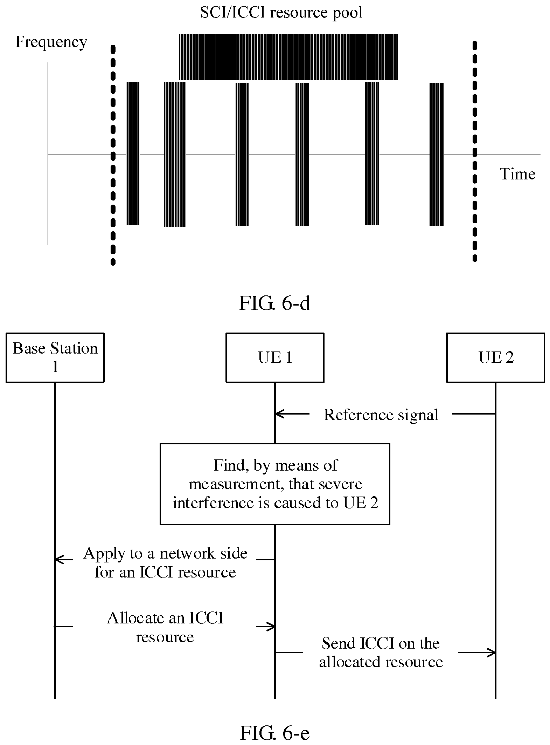

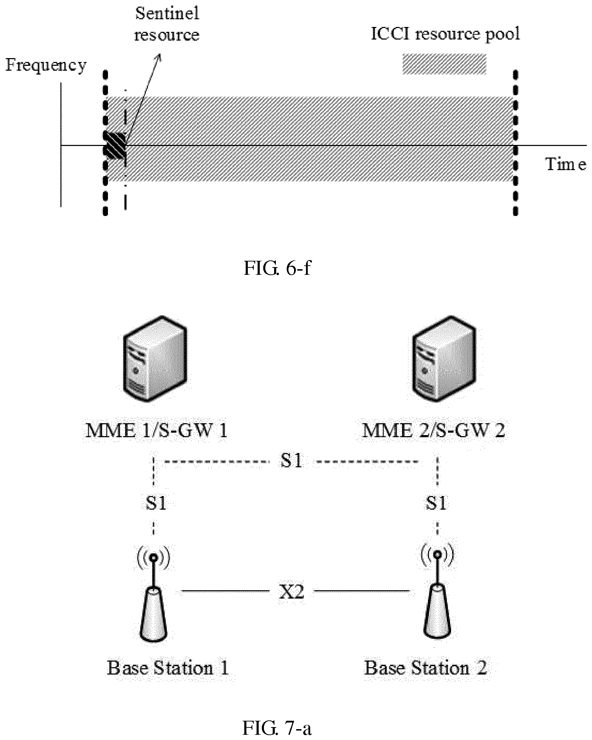

FIG. 6-b is a schematic diagram of an implementation of staggering, in a time domain, an ICCI resource pool and an SCI resource pool;
FIG. 6-c is schematic diagram of another implementation of staggering, in a time domain, an ICCI resource pool and an SCI resource pool;
FIG. 6-d is a schematic diagram of an implementation of multiplexing an SCI resource pool by an ICCI resource pool;
FIG. 6-e is a schematic diagram of an implementation in which UE 1 determines whether to send ICCI and obtains an ICCI resource according to an embodiment of the present invention;
FIG. 6-f is a schematic diagram of an implementation in which UE 2 determines, based on an indication information resource, whether to blindly detect ICCI according to an embodiment of the present invention;

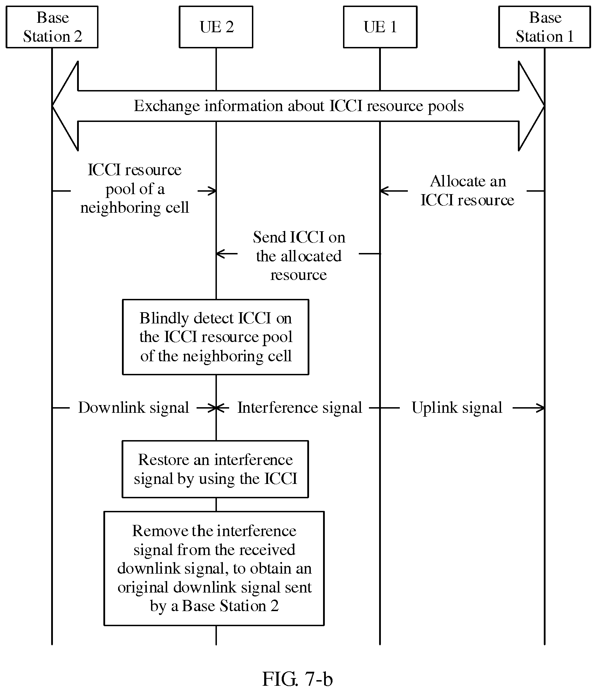

FIG. 7-a is a schematic architectural diagram of an LTE system to which an interference cancellation method is applied according to an embodiment of the present invention;
FIG. 7-b is a schematic diagram of a process of interaction between UE 1 and UE 2 in an inter-eNodeB scenario according to an embodiment of the present invention;

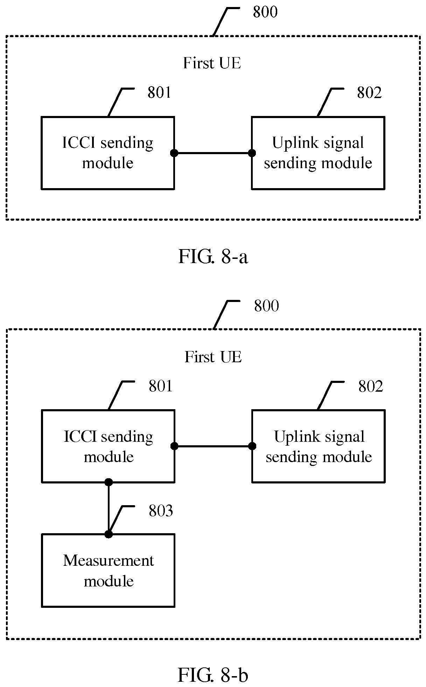

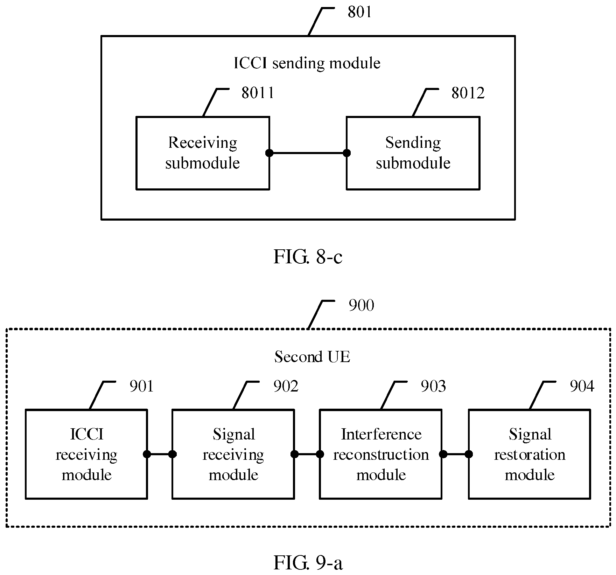

FIG. 8-a is a schematic structural diagram of first UE according to an embodiment of the present invention;
FIG. 8-b is a schematic structural diagram of another first UE according to an embodiment of the present invention;
FIG. 8-c is a schematic structural diagram of an ICCI sending module according to an embodiment of the present invention;

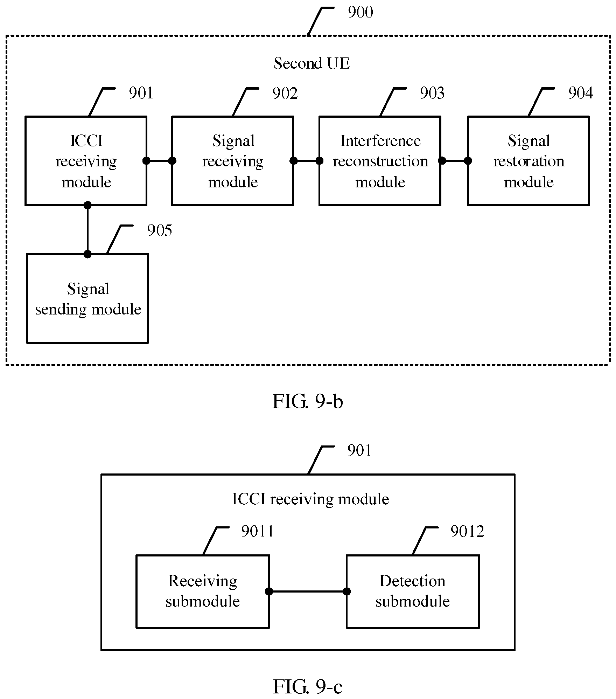

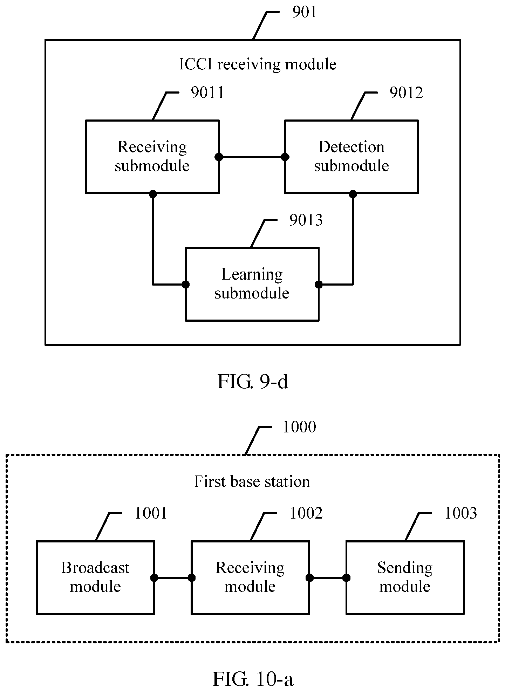

FIG. 9-a is a schematic structural diagram of second UE according to an embodiment of the present invention;
FIG. 9-b is a schematic structural diagram of another second UE according to an embodiment of the present invention;
FIG. 9-c is a schematic structural diagram of an ICCI receiving module according to an embodiment of the present invention;
FIG. 9-d is a schematic structural diagram of another ICCI receiving module according to an embodiment of the present invention;

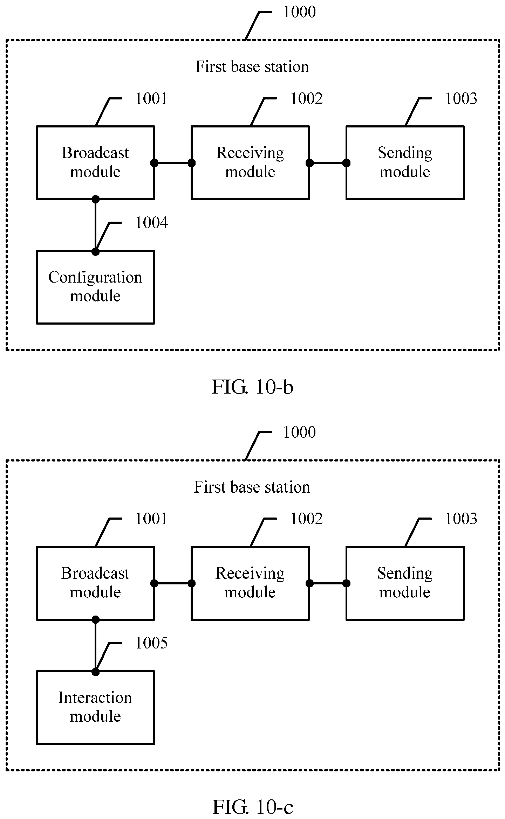

FIG. 10-a is a schematic structural diagram of a first base station according to an embodiment of the present invention;
FIG. 10-b is a schematic structural diagram of another first base station according to an embodiment of the present invention;
FIG. 10-c is a schematic structural diagram of another first base station according to an embodiment of the present invention;

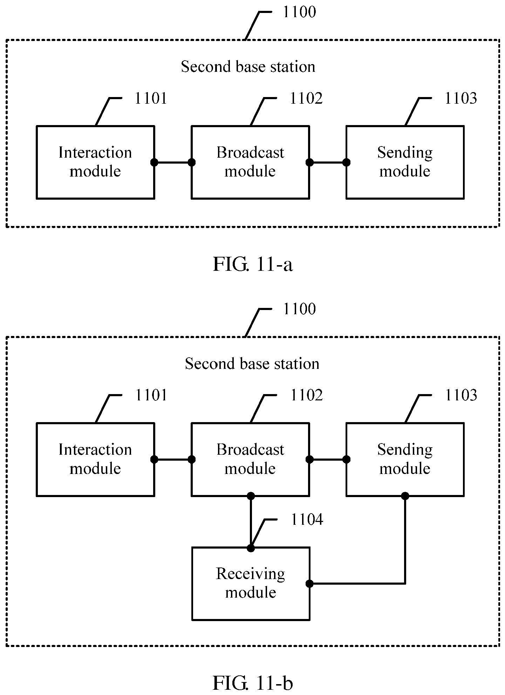

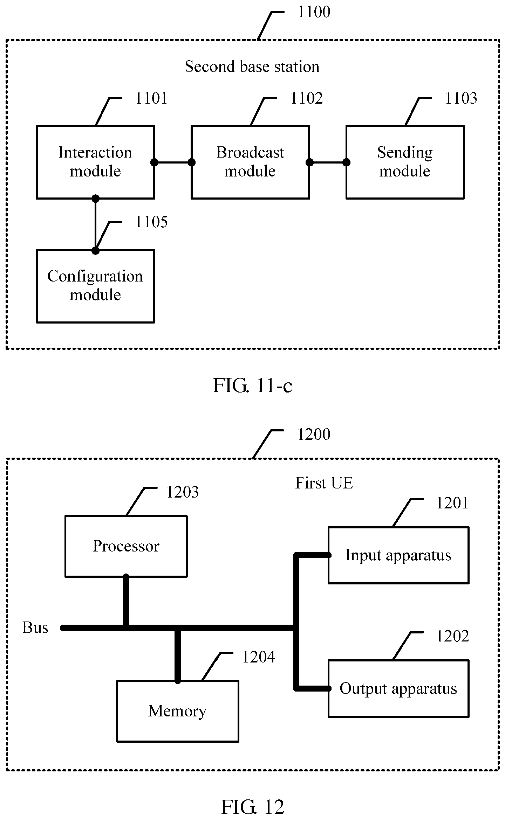

FIG. 11-a is a schematic structural diagram of a second base station according to an embodiment of the present invention;
FIG. 11-b is a schematic structural diagram of another second base station according to an embodiment of the present invention;
FIG. 11-c is a schematic structural diagram of another second base station according to an embodiment of the present invention;
FIG. 12 is a schematic structural diagram of another first UE according to an embodiment of the present invention;

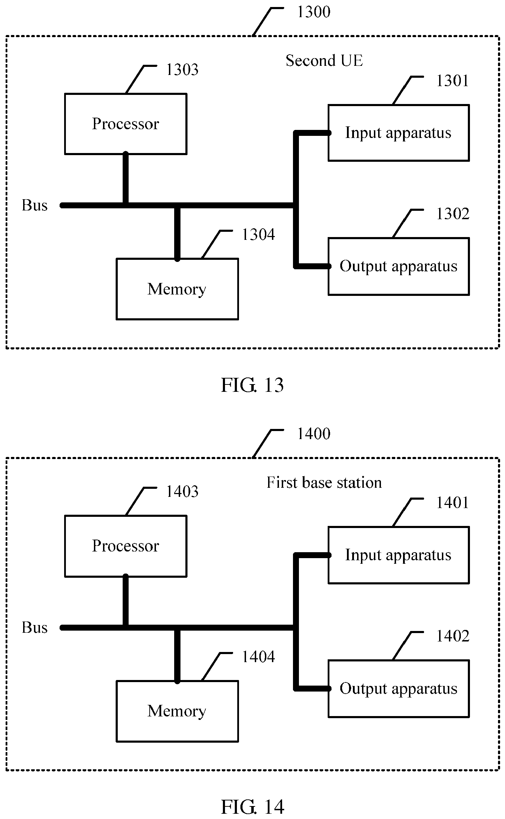

FIG. 13 is a schematic structural diagram of another second UE according to an embodiment of the present invention;
FIG. 14 is a schematic structural diagram of another first base station according to an embodiment of the present invention; and

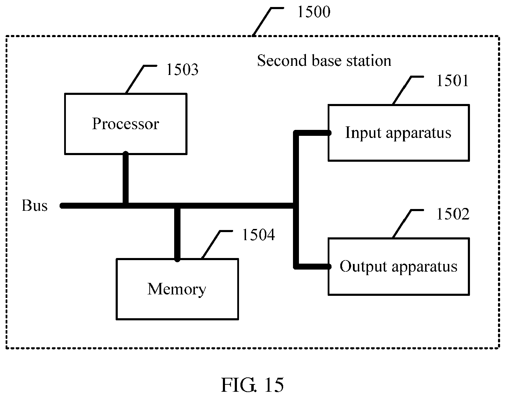

FIG. 15 is a schematic structural diagram of another second base station according to an embodiment of the present invention.

### DESCRIPTION OF EMBODIMENTS

Embodiments of the present invention provide an interference cancellation method, user equipment, and a base station, so as to cancel interference between two neighboring user equipments without reducing transmit power of the user equipments or limiting scheduling flexibility.

To make the invention objectives, features, and advantages of the present invention clearer and more comprehensible, the following clearly and describes the technical solutions in the embodiments of the present invention with reference to the accompanying drawings in the embodiments of the present invention. Apparently, the embodiments described in the following are merely some rather than all of the embodiments of the present invention. All other embodiments obtained by persons skilled in the art based on the embodiments of the present invention shall fall within the protection scope of the present invention.

In the specification, claims, and accompanying drawings of the present invention, the terms "first", "second", and so on are intended to distinguish between similar objects but do not necessarily indicate a specific order or sequence. It should be understood that the terms used in such a way are interchangeable in proper circumstances. This is merely a discrimination manner that is used when objects having a same attribute are described in the embodiments of the present invention. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, system, product, or device.

An architecture of a system to which an interference cancellation method in the embodiments of the present invention is applicable is first described. Referring to FIG. 1-a and FIG. 1-b, FIG. 1-a and FIG. 1-b are schematic architectural diagrams of two different systems according to the embodiments of the present invention. As shown in FIG. 1-a, uplink and downlink subframes are flexibly configured in a TDD mode of an LTE system. First UE and second UE respectively belong to a first base station and a second base station. A network may flexibly adjust an uplink-downlink subframe configuration. For example, when there are a large quantity of uplink services, an uplink-downlink subframe configuration with a relatively large quantity of uplink subframes is allocated; on the contrary, an uplink-downlink subframe configuration with a relatively large quantity of downlink subframes is allocated. However, an uplink signal sent by the first UE causes interference to receiving of a downlink signal by the second UE. As shown in FIG. 1-b, in an intra-frequency full-duplex technology, the first UE and the second UE belong to a same base station. The base station may also send a downlink signal while receiving an uplink signal, and therefore, an uplink signal sent by the first UE causes interference to receiving of a downlink signal by the second UE.

In the embodiments of the present invention, there is a device-to-device (English full name: Device-to-Device, D2D for short) link between first UE and second UE. D2D link-based communication is a technology in which user equipments that are close to each other can directly communicate with each other without help of a third party. With popularity of intelligent terminals, a quantity of intelligent terminals in a network is at an explosive growth stage. Development of a D2D technology is gaining more attention because the D2D technology in a cellular architecture can help an operator to share heavy network load and to unload a cellular service, and can supplement an existing cellular network architecture. By using the D2D technology, a coverage area of the network can be further expanded, and a new profit revenue mode can be created. Moreover, based on a natural advantage of short-distance communication, the D2D technology may further improve spectral efficiency, and achieve higher throughput performance and a lower transmission delay. In addition, when there is no network coverage (such as a disaster scenario), the D2D technology may support direct information exchange between terminals, so as to avoid complete interruption of local communication caused by network breakdown.

An interference cancellation method provided in the present invention is described below by using cancellation of interference between two UEs between which there is a D2D link as an example. The interference cancellation method provided in the embodiments of the present invention is first described from the perspective of a transmit end (that is, first UE) of an uplink signal. Referring to FIG. 2, an interference cancellation method provided in an embodiment of the present invention may include the following steps.

201. The first UE sends an interference cancellation control message (English full name: Interference Cancellation Control Information, ICCI for short) to second UE by using a D2D link.

The ICCI includes information about a configuration used for sending an uplink signal by the first UE.

In this embodiment of the present invention, the first UE and the second UE are two UEs between which there is a D2D link. The first UE and the second UE are two UEs that are neighboring in location, and interference is generated between the two UEs. For example, the uplink signal sent by the first UE causes interference to receiving, by the second UE, of a downlink signal sent by a base station to which the second UE belongs. In this embodiment of the present invention, the first UE first obtains the information about the configuration required for sending the uplink signal. The configuration information is information about a resource configuration used when the first UE sends the uplink signal and information about a format in which the first UE sends the uplink signal. The configuration information may be further used to indicate information necessary for receiving the uplink signal sent by the first UE. A receive end (such as a base station to which the first UE belongs) of the uplink signal sent by the first UE also needs to use the configuration information to receive the uplink signal sent by the first UE serving as a transmit end.

For example, the configuration information may include information about a resource and a modulation and coding scheme (English full name: Modulation Code Scheme, MCS for short) that are used when the first UE sends the uplink signal. After the first UE obtains the configuration information, the first UE adds the configuration information to the ICCI. Because there is the D2D link between the first UE and the second UE, the ICCI sent by the first UE can be received by the second UE. The ICCI sent by the first UE is used by the second UE to reconstruct, after the second UE obtains the ICCI and according to the configuration information included in the ICCI, interference caused to the second UE when the first UE sends the uplink signal, to obtain an interference signal, and remove the interference signal from the downlink signal mixed with the interference signal.

It should be noted that, in this embodiment of the present invention, in addition to the resource configuration information and the information about the format for sending the signal, the configuration information added by the first UE to the ICCI may include other information with reference to an application scenario. This is not specifically limited. Moreover, in addition to the second UE, the ICCI sent by the first UE can also be received by another UE provided that there is a D2D link between the UE and the first UE. The second UE and the another UE can obtain, by using the ICCI sent by the first UE, the information about the configuration used when the first UE sends the uplink signal.

In some embodiments of the present invention, before step 201 in which the first UE sends ICCI to second UE by using a D2D link, the interference cancellation method provided in this embodiment of the present invention may further include the following steps:
A1. The first UE receives, by using the D2D link, a reference signal sent by the second UE.
A2. The first UE measures the reference signal, and determines, according to an obtained measurement result, whether interference caused by an uplink signal sent by the first UE to receiving, by the second UE, of a downlink signal sent by a base station to which the second UE belongs is greater than a preset interference level.
A3. If the interference caused by the uplink signal sent by the first UE to receiving, by the second UE, of the downlink signal sent by the base station to which the second UE belongs is greater than the preset interference level, trigger performing of the step 201 of sending, by first UE, ICCI to second UE by using a D2D link.

That is, in some embodiments of the present invention, before step 201 is performed, the first UE in this embodiment of the present invention may further perform a process of determining whether to send the ICCI. There is the D2D link between the first UE and the second UE, and the second UE sends the reference signal to the first UE. It should be noted that, in addition to the second UE, another UE may also send a reference signal to the first UE by using a D2D link. The first UE measures the reference signal, and a measurement result can be obtained. The first UE determines, according to the measurement result, a degree of the interference caused by the uplink signal sent by the first UE to receiving of the downlink signal by the second UE, and determines, by using the preset interference level, whether the degree of the interference is greater than the preset interference level. The interference level may be flexibly set with reference to a specific application scenario. If the condition in step A3 is met, performing of step 201 is triggered; if the condition in step A3 is not met, step 201 is not performed, and the first UE may directly send the uplink signal.

Specifically, in some embodiments of the present invention, step 201 in which the first UE sends ICCI to second UE by using a D2D link may include the following steps:
B1. The first UE receives control information sent by a base station to which the first UE belongs.
B2. The first UE sends, by using the D2D link, the ICCI to the second UE on an ICCI resource indicated by the control information.

The base station to which the first UE belongs first sends the control information to the first UE. The control information indicates an ICCI resource allocated by the base station to the first UE. The first UE obtains, by parsing the control information, the ICCI resource allocated by the base station to the first UE. The ICCI resource is a resource used by the first UE to send the ICCI. After the first UE obtains the ICCI resource indicated by the control information, the first UE sends the ICCI on the ICCI resource. The second UE receives, by using the D2D link between the first UE and the second UE, the ICCI sent by the first UE, so that the second UE can obtain the information about the configuration used for sending the uplink signal by the first UE. It should be noted that, in this embodiment of the present invention, the first UE may send the ICCI to the second UE in another manner. For example, the first UE sends, in a broadcast manner, the ICCI on the ICCI resource allocated by the base station. In this case, the second UE blindly detects ICCI on the ICCI resource, and the second UE may also obtain the ICCI broadcast by the first UE.

Specifically, in some embodiments of the present invention, for example, the base station to which the first UE belongs is a first base station. The first base station may broadcast an ICCI resource set of a cell in which the first base station is located, and all UEs of the first base station can receive the ICCI resource set. The ICCI resource set is a set that includes multiple ICCI resources, and may also be referred to as an ICCI resource pool. When the first UE and the second UE belong to a same base station, the second UE may receive, by means of broadcast performed by the first base station, the ICCI resource set of the cell in which the first base station is located. The second UE may blindly detect, according to an ICCI resource in the ICCI resource set, whether UE other than the second UE sends ICCI.

For example, the first base station may broadcast the ICCI resource set before step B1 is performed, and then the first base station sends the control information to the first UE. The control information indicates the ICCI resource allocated by the first base station to the first UE. Herein, the first base station may actively allocate the ICCI resource to the first UE, or the first base station may allocate the ICCI resource to the first UE according to an ICCI resource allocation request sent by the first UE. For example, after the first UE measures the reference signal sent by the second UE, if the first UE determines that the interference caused by the first UE to the second UE is greater than the preset interference level, the first UE sends the ICCI resource allocation request to the first base station. The first base station allocates the ICCI resource to the first UE according to the request of the first UE, and then the first base station sends the control information to the first UE. The first UE obtains the ICCI resource by using the control information.

In some embodiments of the present invention, before step 201 in which the first UE sends ICCI to second UE by using a D2D link, the interference cancellation method provided in this embodiment of the present invention may further include the following step:
C1. The first UE sends ICCI indication information on an indication information resource in an ICCI resource set broadcast by the base station to which the first UE belongs, where the ICCI indication information is used by the second UE to determine, according to whether the ICCI indication information is sent on the indication information resource, whether UE other than the second UE sends ICCI on an ICCI resource in the ICCI resource set.

In some embodiments of the present invention, the base station to which the first UE belongs configures the indication information resource in the ICCI resource set of the cell in which the base station is located. The indication information resource is used by the first UE to determine, according to whether to send the ICCI, whether to send the ICCI indication information on the indication information resource. For example, the base station may configure the indication information resource at the very beginning of a time domain in the ICCI resource set. If the first UE determines to send the ICCI, the first UE sends the ICCI indication information on the indication information resource. The second UE may determine, given that the ICCI indication information is sent on the indication information resource, that UE is to send ICCI. If the first UE determines not to send the ICCI, the first UIE does not send the ICCI indication information on the indication information resource. When the second UE detects no ICCI indication information by using the indication information resource, the second UE determines that no UE sends ICCI on an ICCI resource in the ICCI resource set, and accordingly, the second UE does not need to blindly detect ICCI on an ICCI resource in the ICCI resource set, so that power consumption of the second UE and detection complexity may be reduced. It should be noted that, in step C1, the ICCI indication information sent by the first UE may be received by multiple UEs that have a D2D link with the first UE, and all UEs that receive the ICCI indication information can determine that UE sends ICCI on an ICCI resource in the ICCI resource set.

The indication information resource configured by the base station in the ICCI resource set may also be referred to as a "sentinel resource". For example, the base station to which the first UE belongs may configure a corresponding sentinel resource at the very beginning of the time domain in the ICCI resource set. The first UE may determine, according to whether to send the ICCI, whether to send the ICCI indication information on the sentinel resource. The second UE serves as a receive end. The receive end UE determines, by detecting whether the ICCI indication information is sent on the sentinel resource, whether to further blindly detect ICCI on an ICCI resource in the ICCI resource set. For example, when no ICCI resource information is detected on the sentinel resource, it indicates that no ICCI is transmitted on a subsequent ICCI resource in the ICCI resource set. In this case, the second UE does not blindly detect ICCI on the subsequent ICCI resource in the ICCI resource set. Alternatively, when there is the ICCI indication information on the sentinel resource, it indicates that the ICCI is transmitted on a subsequent ICCI resource in the ICCI resource set. In this case, the second UE needs to further blindly detect ICCI on the subsequent ICCI resource in the ICCI resource set.

In some embodiments of the present invention, the ICCI resource set used when the first UE sends the ICCI may be obtained in the following manners.
1. The ICCI resource set is obtained by allocating some resources in an existing sidelink control message (English full name: Sidelink Control Information, SCI for short) resource set to ICCI for use. A sidelink control message resource may also be referred to as a D2D link resource. SCI is control information that is transmitted before D2D data in a D2D technology, and a function of the SCI is to provide information necessary for receiving the D2D data by receive end UE. In this implementation, the ICCI resource set is a part of the SCI resource set. For example, some time domain resources in the existing SCI resource set may be allocated to UE for sending the ICCI, and the some resources allocated to the ICCI are referred to as the ICCI resource set. Alternatively, some frequency domain resources in the existing SCI resource set are allocated to UE for sending the ICCI, and the some resources allocated to the ICCI are referred to as the ICCI resource set. Alternatively, some frequency domain resources that are in all frequency domain resources and that are corresponding to some time domain resources in the existing SCI resource set are allocated to UE for sending the ICCI, and the some resources allocated to the ICCI are referred to as the ICCI resource set.
   For example, time domain resources included in the SCI resource set are t₁, t₂, t₃, and t₄, and frequency domain resources included in the SCI resource set are f₁, f₂, f₃, and f₄. For example, an implementation includes: the frequency domain resources f₁ and f₂ that are in all the frequency domain resources and that are corresponding to the time domain resource t₁ in all the time domain resources may be allocated to the ICCI, the frequency domain resources f₃ and f₄ that are in all the frequency domain resources and that are corresponding to the time domain resource t₁ are allocated to the SCI, and all the frequency domain resources f₁, f₂, f₃, and f₄ corresponding to the time domain resources t₂, t₃, and t₄ are allocated to the SCI. Another implementation includes: the frequency domain resources f₁, f₂, and f₃ that are in all the frequency domain resources and that are corresponding to the time domain resource t₁ in all the time domain resources may be allocated to the ICCI, the frequency domain resources f₂ and f₃ that are in all the frequency domain resources and that are corresponding to the time domain resource t₃ in all the time domain resources are allocated to the ICCI, the frequency domain resource f₄ in all the frequency domain resources that is corresponding to the time domain resource t₁ is allocated to the SCI, the frequency domain resources f₁ and f₄ that are in all the frequency domain resources and that are corresponding to the time domain resource t₃ are allocated to the SCI, and all the frequency domain resources f₁, f₂, f₃, and f₄ corresponding to the time domain resources t₂ and t₄ are allocated to the SCI. It should be noted that the implementations are merely examples for description, and are not intended to limit the present invention. In practical application, another type of resource configuration manner may be used.
2. The ICCI resource set is obtained by allocating a resource other than an existing SCI resource set to ICCI for use, that is, the ICCI resource set and the existing SCI resource set are parallel. The two types of resources are different resources in a time domain or a frequency domain. A configuration manner of the ICCI resource set may be similar to a configuration manner of the existing SCI resource set. A difference lies in that, the configured ICCI resource set and the configured existing SCI resource set are distributed in completely different time domains or frequency domains. For example, the ICCI resource set and the existing SCI resource set are obtained by using different time domain resources. The ICCI resource set and the existing SCI resource set may be separate resources in the time domain. Resource overheads are increased when an ICCI resource set is additionally defined in addition to the original SCI resource set, but a network side has control over an additional ICCI resource.
3. The ICCI resource set multiplexes an SCI resource set, that is, no additional resource set needs to be defined for ICCI resources, and the ICCI resource set directly multiplexes the SCI resource set. In this way, no additional resource overheads are added, but SCI and ICCI need to be distinguished, that is, it is required to indicate, in a field in sent SCI/ICCI, whether the SCI or the ICCI is transmitted. The sent SCI/ICCI needs to carry a transmission indication, to indicate whether the SCI or the ICCI is transmitted currently. For example, existing SCI is transmitted to a particular target user, and a destination identifier is configured in the existing SCI. ICCI has no particular target user, and therefore, a field that is in the SCI and in which the destination identifier is located may be modified. When the field is set to a special reserved bit string (for example, a value of the bit string is all 0s or all Is), it indicates that the ICCI is transmitted in a subframe.

202. The first UE sends, after sending the ICCI, an uplink signal to a base station to which the first UE belongs, where the uplink signal sent by the first UE causes interference to receiving, by the second UE, of a downlink signal sent by a base station to which the second UE belongs.

In this embodiment of the present invention, after the first UE sends the ICCI, the first UE sends the uplink signal to the base station to which the first UE belongs. Because the first UE and the second UE are neighboring in location, the uplink signal sent by the first UE causes the interference to receiving, by the second UE, of the downlink signal sent by the base station to which the second UE belongs. The second UE may perform interference reconstruction on the interference according to the configuration information included in the ICCI, to obtain the interference signal. Because the first UE sends the ICCI before the first UE sends the uplink signal, the ICCI can be received by the second UE that may be interfered with, so that the second UE may reconstruct, according to the ICCI, the uplink signal sent by the first UE. The second UE can cancel the interference after reconstructing the uplink signal sent by the first UE, so as to cancel interference between the UEs.

It can be learned from the description of the present invention in the foregoing embodiment that, the first UE sends the ICCI to the second UE by using the D2D link, and the ICCI includes the information about the configuration used for sending the uplink signal by the first UE. The second UE can receive, by using the D2D link, the ICCI sent by the first UE. After the first UE sends the ICCI, the first UE sends the uplink signal to the base station to which the first UE belongs, and the uplink signal sent by the first UE causes the interference to receiving, by the second UE, of the downlink signal sent by the base station to which the second UE belongs. The second UE receives the downlink signal and the interference signal mixed in the downlink signal, and then the second UE reconstructs, according to the configuration information included in the ICCI, the interference caused to the second UE when the first UE sends the uplink signal, to obtain the interference signal. The second UE removes the interference signal from the downlink signal mixed with the interference signal, to obtain an original downlink signal sent by the base station to which the second UE belongs. In this embodiment of the present invention, the second UE may reconstruct the interference signal according to the ICCI received from the first UE, and after reconstruction, the interference signal may be removed from the downlink signal mixed with the interference signal. Therefore, interference caused by an uplink signal sent by UE to receiving of a downlink signal by another UE may be cancelled. In this embodiment of the present invention, there is no need to limit receiving a downlink signal by the second UE serving as a receive end, or limit transmit power used when the first UE serves as a transmit end to send an uplink signal. Therefore, scheduling flexibility and freedom are not limited.

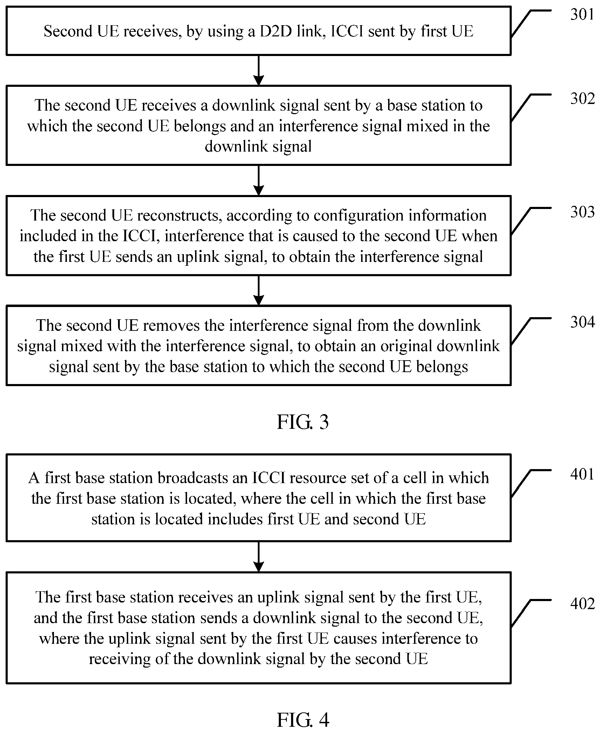

An interference cancellation method provided in the embodiments of the present invention is described in the foregoing embodiment from the perspective of a transmit end (that is, first UE) of an uplink signal, and the interference cancellation method provided in the embodiments of the present invention is described below from the perspective of a receive end (that is, second UE) interfered with by the uplink signal sent by the first UE. Referring to FIG. 3, an interference cancellation method provided in an embodiment of the present invention may include the following steps.

301. The second UE receives, by using a D2D link, ICCI sent by first UE.

The ICCI includes information about a configuration used for sending an uplink signal by the first UE.

In this embodiment of the present invention, the first UE and the second UE are two UEs between which there is a D2D link. The first UE and the second UE are two UEs that are neighboring in location, and interference is generated between the two UEs. For example, the uplink signal sent by the first UE causes interference to receiving, by the second UE, of a downlink signal sent by a base station to which the second UE belongs. The first UE sends the ICCI by using the D2D link, and the second UE receives, by using the D2D link, the ICCI sent by the first UE. The second UE obtains, from the ICCI sent by the first UE, the information about the configuration used for sending the uplink signal by the first UE.

In some embodiments of the present invention, before step 301 in which the second UE receives, by using a D2D link, ICCI sent by first UE, the interference cancellation method provided in this embodiment of the present invention may further include the following step:
D1. The second UE sends, by using the D2D link, a reference signal to the first UE.

There is the D2D link between the second UE and the first UE, and the second UE may send the reference signal to the first UE. The first UE may measure the reference signal, and the first UE determines, according to a measurement result, whether to send the ICCI.

In some embodiments of the present invention, step 301 in which the second UE receives, by using a D2D link, ICCI sent by first UE may specifically include the following steps:
E1. The second UE receives an ICCI resource set broadcast by a base station to which the second UE belongs.
E2. The second UE blindly detects ICCI carried on the D2D link on an ICCI resource in the ICCI resource set.

The base station to which the second UE belongs broadcasts the ICCI resource set, and the second UE can receive the ICCI resource set. Then the second UE may blindly detect ICCI carried on the D2D link on an ICCI resource in the ICCI resource set, that is, the second UE blindly detects whether UE other than the second UE sends ICCI on an ICCI resource in the ICCI resource set.

In some embodiments of the present invention, the base station to which the second UE belongs and a base station to which the first UE belongs may be the same base station. In this case, if the base station broadcasts an ICCI resource set of a cell in which the base station is located, both the first UE and the second UE can obtain the ICCI resource set by using a broadcast message. The first UE sends the ICCI on an ICCI resource in the ICCI resource set of the cell in which the base station is located. The second UE blindly detects ICCI on an ICCI resource in the ICCI resource set of the cell in which the base station is located, so that the second UE can obtain the ICCI sent by the first UE.

In some other embodiments of the present invention, the base station to which the second UE belongs and a base station to which the first UE belongs are two different base stations. For example, the base station to which the first UE belongs is a first base station, and the base station to which the second UE belongs is a second base station. In this case, the ICCI resource set broadcast by the second base station in step E1 is an ICCI resource set of a cell in which the first base station is located. The second UE obtains the ICCI resource set of the cell in which the first base station is located. The first UE included in the cell in which the first base station is located sends the ICCI on an ICCI resource in the ICCI resource set. The second UE blindly detects ICCI carried on the D2D link on an ICCI resource in the ICCI resource set of the cell in which the first base station is located, so that the second UE can obtain the ICCI sent by the first UE. The second base station and the first base station may be two different base stations. In this case, a message may be transmitted between the first base station and the second base station by using an X2 interface or a core network. For example, the first base station sends, to the second base station by using the X2 interface, the ICCI resource set of the cell in which the first base station is located, and the first base station receives, by using the X2 interface, an ICCI resource set that is of a cell in which the second base station is located and that is sent by the second base station. Likewise, the second base station receives, by using the X2 interface, the ICCI resource set of the cell in which the first base station is located, and the second base station sends, to the first base station by using the X2 interface, the ICCI resource set of the cell in which the first base station is located.

In some embodiments of the present invention, the used CCI resource set that is broadcast by the base station to which the second UE belongs and that is received by the second UE may be obtained in the following manners.
1. The ICCI resource set is obtained by allocating some resources in an existing sidelink control message (English full name: Sidelink Control Information, SCI for short) resource set to ICCI for use. A sidelink control message resource may also be referred to as a D2D link resource. SCI is control information that is transmitted before D2D data in a D2D technology, and a function of the SCI is to provide information necessary for receiving the D2D data by receive end UE. In this implementation, the ICCI resource set is a part of the SCI resource set. For example, some time domain resources in the existing SCI resource set may be allocated to UE for sending the ICCI, and the some resources allocated to the ICCI are referred to as the ICCI resource set. Alternatively, some frequency domain resources in the existing SCI resource set are allocated to UE for sending the ICCI, and the some resources allocated to the ICCI are referred to as the ICCI resource set. Alternatively, some frequency domain resources that are in all frequency domain resources and that are corresponding to some time domain resources in the existing SCI resource set are allocated to UE for sending the ICCI, and the some resources allocated to the ICCI are referred to as the ICCI resource set.
   For example, time domain resources included in the SCI resource set are t₁, t₂, t₃, and t₄, and frequency domain resources included in the SCI resource set are f₁, f₂, f₃, and f₄. For example, an implementation includes: the frequency domain resources f₁ and f₂ that are in all the frequency domain resources and that are corresponding to the time domain resource t₁ in all the time domain resources may be allocated to the ICCI, the frequency domain resources f₃ and f₄ that are in all the frequency domain resources and that are corresponding to the time domain resource t₁ are allocated to the SCI, and all the frequency domain resources f₁, f₂, f₃, and f₄ corresponding to the time domain resources t₂, t₃, and t₄ are allocated to the SCI. Another implementation includes: the frequency domain resources f₁, f₂, and f₃ that are in all the frequency domain resources and that are corresponding to the time domain resource t₁ in all the time domain resources may be allocated to the ICCI, the frequency domain resources f₂ and f₃ that are in all the frequency domain resources and that are corresponding to the time domain resource t₃ in all the time domain resources are allocated to the ICCI, the frequency domain resource f₄ in all the frequency domain resources that is corresponding to the time domain resource t₁ is allocated to the SCI, the frequency domain resources f₁ and f₄ that are in all the frequency domain resources and that are corresponding to the time domain resource t₃ are allocated to the SCI, and all the frequency domain resources f₁, f₂, f₃, and f₄ corresponding to the time domain resources t₂ and t₄ are allocated to the SCI. It should be noted that the implementations are merely examples for description, and are not intended to limit the present invention. In practical application, another type of resource configuration manner may be used.
2. The ICCI resource set is obtained by allocating a resource other than an existing SCI resource set to ICCI for use, that is, the ICCI resource set and the existing SCI resource set are parallel. The two types of resources are different resources in a time domain or a frequency domain. A configuration manner of the ICCI resource set may be similar to a configuration manner of the existing SCI resource set. A difference lies in that, the configured ICCI resource set and the configured existing SCI resource set are distributed in completely different time domains or frequency domains. For example, the ICCI resource set and the existing SCI resource set are obtained by using different time domain resources. The ICCI resource set and the existing SCI resource set may be separate resources in the time domain. Resource overheads are increased when an ICCI resource set is additionally defined in addition to the original SCI resource set, but a network side has control over an additional ICCI resource.
3. The ICCI resource set multiplexes an SCI resource set, that is, no additional resource set needs to be defined for ICCI resources, and the ICCI resource set directly multiplexes the SCI resource set. In this way, no additional resource overheads are added, but SCI and ICCI need to be distinguished, that is, it is required to indicate, in a field in sent SCI/ICCI, whether the SCI or the ICCI is transmitted. The sent SCI/ICCI needs to carry a transmission indication, to indicate whether the SCI or the ICCI is transmitted currently. For example, existing SCI is transmitted to a particular target user, and a destination identifier is configured in the existing SCI. ICCI has no particular target user, and therefore, a field that is in the SCI and in which the destination identifier is located may be modified. When the field is set to a special reserved bit string (for example, a value of the bit string is all 0s or all Is), it indicates that the ICCI is transmitted in a subframe.

Further, in some embodiments of the present invention, after step E1 in which the second UE receives an ICCI resource set broadcast by a base station to which the second UE belongs, the interference cancellation method provided in this embodiment of the present invention may further include the following steps:
F1. The second UE learns whether an indication information resource in the ICCI resource set carries ICCI indication information.
F2. If the indication information resource does not carry the ICCI indication information, the second UE determines that there is no need to blindly detect ICCI carried on the D2D link on an ICCI resource in the ICCI resource set.
F3. If the indication information resource carries the ICCI indication information, trigger the second UE to perform step E2: The second UE blindly detects ICCI carried on the D2D link on an ICCI resource in the ICCI resource set.

In this embodiment of the present invention, the base station to which the first UE belongs configures the indication information resource in the ICCI resource set of the cell in which the base station is located. The indication information resource is used by the first UE to determine, according to whether to send the ICCI, whether to send the ICCI indication information on the indication information resource. The second UE determines, according to whether the ICCI indication information is sent on the indication information resource, whether there is a need to blindly detect ICCI carried on the D2D link on an ICCI resource in the ICCI resource set. For example, the base station may configure the indication information resource at the very beginning of a time domain in the ICCI resource set. If the first UE determines to send the ICCI, the first UE sends the ICCI indication information on the indication information resource. The second UE may determine, given that the ICCI indication information is sent on the indication information resource, that UE is to send ICCI. In this case, the second UE needs to blindly detect ICCI carried on the D2D link on an ICCI resource in the ICCI resource set. If the first UE determines not to send the ICCI, the first UIE does not send the ICCI indication information on the indication information resource. When the second UE detects no ICCI indication information by using the indication information resource, the second UE determines that no UE sends ICCI on an ICCI resource in the ICCI resource set, and accordingly, the second UE does not need to blindly detect ICCI on an ICCI resource in the ICCI resource set, so that power consumption of the second UE and detection complexity may be reduced. It should be noted that, in step F1 to step F3, the steps performed by the second UE may also be performed by multiple UEs that have a D2D link with the first UE, and all UEs that receive the ICCI indication information can determine that UE sends ICCI on an ICCI resource in the ICCI resource set. All the UEs need to blindly detect ICCI on an ICCI resource in the ICCI resource set.

302. The second UE receives a downlink signal sent by a base station to which the second UE belongs and an interference signal mixed in the downlink signal.

The interference signal is interference that is caused to the second UE when the first UE sends the uplink signal and that is received by the second UE when the second UE receives the downlink signal.

In this embodiment of the present invention, when receiving the downlink signal sent by the base station, the second UE receives the interference signal mixed in the downlink signal. The interference signal is generated when the uplink signal sent by the first UE is received by the second UE and is mixed in the downlink signal received by the second UE. In this embodiment of the present invention, interference is generated between the second UE and the first UE. However, the base station to which the second UE belongs can still send the downlink signal to the second UE, and does not need to stop sending the downlink signal even if the second UE may be interfered with by the first UE. Therefore, the second UE can receive the downlink signal sent by the base station to which the second UE belongs, but the downlink signal received by the second UE is mixed with the interference signal.

303. The second UE reconstructs, according to configuration information included in the ICCI, interference that is caused to the second UE when the first UE sends an uplink signal, to obtain the interference signal.

In this embodiment of the present invention, after the second UE receives both the downlink signal and the interference signal mixed in the downlink signal, the second UE obtains, by using step 301, the information about the configuration used for sending the uplink signal by the first UE. Therefore, the second UE may reconstruct the interference signal according to the configuration information included in the ICCI sent by the first UE. For a process of reconstructing the interference signal by the second UE, refer to the prior art.

304. The second UE removes the interference signal from the downlink signal mixed with the interference signal, to obtain an original downlink signal sent by the base station to which the second UE belongs.

In this embodiment of the present invention, after reconstructing the interference signal according to the configuration information included in the ICCI, the second UE may remove the interference signal from the downlink signal mixed with the interference signal, to obtain the original downlink signal sent by the base station to which the second UE belongs. Therefore, the second UE can cancel the interference caused by the first UE to the second UE, so that without limiting a downlink scheduling behavior of the base station or limiting an uplink scheduling behavior of the first UE, the second UE can normally receive the downlink signal sent by the base station to which the second UE belongs. Transmit power of the first UE does not need to be reduced, so that strength of the uplink signal that is sent by the first UE and received by a receive end may be ensured.

It can be learned from the description of the present invention in the foregoing embodiment that, the first UE sends the ICCI to the second UE by using the D2D link, and the ICCI includes the information about the configuration used for sending the uplink signal by the first UE. The second UE can receive, by using the D2D link, the ICCI sent by the first UE. After the first UE sends the ICCI, the first UE sends the uplink signal to the base station to which the first UE belongs, and the uplink signal sent by the first UE causes the interference to receiving, by the second UE, of the downlink signal sent by the base station to which the second UE belongs. The second UE receives the downlink signal and the interference signal mixed in the downlink signal, and then the second UE reconstructs, according to the configuration information included in the ICCI, the interference caused to the second UE when the first UE sends the uplink signal, to obtain the interference signal. The second UE removes the interference signal from the downlink signal mixed with the interference signal, to obtain the original downlink signal sent by the base station to which the second UE belongs. In this embodiment of the present invention, the second UE may reconstruct the interference signal according to the ICCI received from the first UE, and after reconstruction, the interference signal may be removed from the downlink signal mixed with the interference signal. Therefore, interference caused by an uplink signal sent by UE to receiving of a downlink signal by another UE may be cancelled. In this embodiment of the present invention, there is no need to limit receiving a downlink signal by the second UE serving as a receive end, or limit transmit power used when the first UE serves as a transmit end to send an uplink signal. Therefore, scheduling flexibility and freedom are not limited.

An interference cancellation method provided in the embodiments of the present invention is described in the foregoing embodiments from aspects of first UE and second UE, and the interference cancellation method provided in the embodiments of the present invention is described below on a base station side. Referring to FIG. 4, an interference cancellation method provided in an embodiment of the present invention may include the following steps.

401. A first base station broadcasts an ICCI resource set of a cell in which the first base station is located, where the cell in which the first base station is located includes first UE and second UE.

In this embodiment of the present invention, for example, a base station to which the first UE belongs is the first base station. The first base station may broadcast the ICCI resource set of the cell in which the first base station is located, and all UEs of the first base station can receive the ICCI resource set. The ICCI resource set is a set that includes multiple ICCI resources, and may also be referred to as an ICCI resource pool. When the first UE and the second UE belong to a same base station, the second UE may receive, by means of broadcast performed by the first base station, the ICCI resource set of the cell in which the first base station is located. The second UE may blindly detect, according to an ICCI resource in the ICCI resource set, whether UE other than the second UE sends ICCI.

In some embodiments of the present invention, the ICCI resource set of the cell in which the first base station is located may be obtained in the following manners.
1. The ICCI resource set is obtained by allocating some resources in an existing sidelink control message (English full name: Sidelink Control Information, SCI for short) resource set to ICCI for use. A sidelink control message resource may also be referred to as a D2D link resource. SCI is control information that is transmitted before D2D data in a D2D technology, and a function of the SCI is to provide information necessary for receiving the D2D data by receive end UE. In this implementation, the ICCI resource set is a part of the SCI resource set. For example, some time domain resources in the existing SCI resource set may be allocated to UE for sending the ICCI, and the some resources allocated to the ICCI are referred to as the ICCI resource set. Alternatively, some frequency domain resources in the existing SCI resource set are allocated to UE for sending the ICCI, and the some resources allocated to the ICCI are referred to as the ICCI resource set. Alternatively, some frequency domain resources that are in all frequency domain resources and that are corresponding to some time domain resources in the existing SCI resource set are allocated to UE for sending the ICCI, and the some resources allocated to the ICCI are referred to as the ICCI resource set.
   For example, time domain resources included in the SCI resource set are t₁, t₂, t₃, and t₄, and frequency domain resources included in the SCI resource set are f₁, f₂, f₃, and f₄. For example, an implementation includes: the frequency domain resources f₁ and f₂ that are in all the frequency domain resources and that are corresponding to the time domain resource t₁ in all the time domain resources may be allocated to the ICCI, the frequency domain resources f₃ and f₄ that are in all the frequency domain resources and that are corresponding to the time domain resource t₁ are allocated to the SCI, and all the frequency domain resources f₁, f₂, f₃, and f₄ corresponding to the time domain resources t₂, t₃, and t₄ are allocated to the SCI. Another implementation includes: the frequency domain resources f₁, f₂, and f₃ that are in all the frequency domain resources and that are corresponding to the time domain resource t₁ in all the time domain resources may be allocated to the ICCI, the frequency domain resources f₂ and f₃ that are in all the frequency domain resources and that are corresponding to the time domain resource t₃ in all the time domain resources are allocated to the ICCI, the frequency domain resource f₄ in all the frequency domain resources that is corresponding to the time domain resource t₁ is allocated to the SCI, the frequency domain resources f₁ and f₄ that are in all the frequency domain resources and that are corresponding to the time domain resource t₃ are allocated to the SCI, and all the frequency domain resources f₁, f₂, f₃, and f₄ corresponding to the time domain resources t₂ and t₄ are allocated to the SCI. It should be noted that the implementations are merely examples for description, and are not intended to limit the present invention. In practical application, another type of resource configuration manner may be used.
2. The ICCI resource set is obtained by allocating a resource other than an existing SCI resource set to ICCI for use, that is, the ICCI resource set and the existing SCI resource set are parallel. The two types of resources are different resources in a time domain or a frequency domain. A configuration manner of the ICCI resource set may be similar to a configuration manner of the existing SCI resource set. A difference lies in that, the configured ICCI resource set and the configured existing SCI resource set are distributed in completely different time domains or frequency domains. For example, the ICCI resource set and the existing SCI resource set are obtained by using different time domain resources. The ICCI resource set and the existing SCI resource set may be separate resources in the time domain. Resource overheads are increased when an ICCI resource set is additionally defined in addition to the original SCI resource set, but a network side has control over an additional ICCI resource.
3. The ICCI resource set multiplexes an SCI resource set, that is, no additional resource set needs to be defined for ICCI resources, and the ICCI resource set directly multiplexes the SCI resource set. In this way, no additional resource overheads are added, but SCI and ICCI need to be distinguished, that is, it is required to indicate, in a field in sent SCI/ICCI, whether the SCI or the ICCI is transmitted. The sent SCI/ICCI needs to carry a transmission indication, to indicate whether the SCI or the ICCI is transmitted currently. For example, existing SCI is transmitted to a particular target user, and a destination identifier is configured in the existing SCI. ICCI has no particular target user, and therefore, a field that is in the SCI and in which the destination identifier is located may be modified. When the field is set to a special reserved bit string (for example, a value of the bit string is all 0s or all Is), it indicates that the ICCI is transmitted in a subframe.

402. The first base station receives an uplink signal sent by the first UE, and the first base station sends a downlink signal to the second UE, where the uplink signal sent by the first UE causes interference to receiving of the downlink signal by the second UE.

In this embodiment of the present invention, after the first base station broadcasts the ICCI resource set of the cell in which the first base station is located and before step 402 is performed, the first base station in this embodiment of the present invention may further send control information to the first UE. The control information indicates an ICCI resource allocated by the first base station to the first UE. The first UE obtains, by parsing the control information, the ICCI resource allocated by the first base station to the first UE. The ICCI resource is a resource used by the first UE to send ICCI. After the first UE obtains the ICCI resource indicated by the control information, the first UE sends the ICCI on the ICCI resource. The second UE in the cell in which the first base station is located may receive the ICCI resource set of the cell in which the first base station is located. The second UE may blindly detect whether UE sends ICCI on an ICCI resource in the ICCI resource set of the cell in which the first base station is located.

The first UE sends the uplink signal after the first UE sends the ICCI, and the first base station receives the uplink signal sent by the first UE. The first base station is an intra-frequency full-duplex base station. The first base station sends the downlink signal to the second UE while the first base station receives the uplink signal. Consequently, the uplink signal sent by the first UE causes interference to receiving of the downlink signal by the second UE.

In some embodiments of the present invention, before step 301 in which a first base station broadcasts an ICCI resource set of a cell in which the first base station is located, the interference cancellation method provided in this embodiment of the present invention may further include the following step:
G1. The first base station configures an indication information resource in the ICCI resource set of the cell in which the first base station is located, where the indication information resource is used by the first UE to determine, according to whether to send ICCI, whether to send ICCI indication information on the indication information resource.

In some embodiments of the present invention, the base station to which the first UE belongs configures the indication information resource in the ICCI resource set of the cell in which the base station is located. The indication information resource is used by the first UE to determine, according to whether to send the ICCI, whether to send the ICCI indication information on the indication information resource. For example, the base station may configure the indication information resource at the very beginning of a time domain in the ICCI resource set.

In some embodiments of the present invention, the interference cancellation method provided in this embodiment of the present invention may further include the following steps:
HI. The first base station obtains, by interacting with a second base station, an ICCI resource set of a cell in which the second base station is located.
H2. The first base station broadcasts the ICCI resource set of the cell in which the second base station is located, so that the second UE blindly detects whether UE included in the cell in which the second base station is located sends ICCI on an ICCI resource in the ICCI resource set of the cell in which the second base station is located.

That the first base station broadcasts the ICCI resource set of the cell of the first base station is described in step 401. In some embodiments of the present invention, the first base station may further interact with a neighboring base station (such as the second base station), for example, a message may be transmitted between the first base station and the second base station by using an X2 interface or a core network. Specifically, the first base station sends, to the second base station by using the X2 interface, the ICCI resource set of the cell in which the first base station is located, and the first base station receives, by using the X2 interface, the ICCI resource set that is of the cell in which the second base station is located and that is sent by the second base station. Likewise, the second base station receives, by using the X2 interface, the ICCI resource set of the cell in which the first base station is located, and the second base station sends, to the first base station by using the X2 interface, the ICCI resource set of the cell in which the first base station is located. After the first base station receives the ICCI resource set of the cell in which the second base station is located, the first base station broadcasts the ICCI resource set of the cell in which the second base station is located, and all UEs included in the cell in which the first base station is located can receive the ICCI resource set of the cell in which the second base station is located. For example, the second UE included in the cell in which the first base station is located blindly detects whether UE included in the cell in which the second base station is located sends ICCI on an ICCI resource in the ICCI resource set of the cell in which the second base station is located.

It can be learned from the description of the present invention in the foregoing embodiment that, the first base station broadcasts the ICCI resource set of the cell in which the first base station is located, and the cell in which the first base station is located includes the first user equipment UE and the second UE. The first base station receives the uplink signal sent by the first UE, and the first base station sends the downlink signal to the second UE. The uplink signal sent by the first UE causes the interference to receiving of the downlink signal by the second UE. The second UE receives the downlink signal and an interference signal mixed in the downlink signal, and then the second UE reconstructs, according to configuration information included in the ICCI, the interference caused to the second UE when the first UE sends the uplink signal, to obtain the interference signal. The second UE removes the interference signal from the downlink signal mixed with the interference signal, to obtain an original downlink signal sent by a base station to which the second UE belongs. In this embodiment of the present invention, the second UE may reconstruct the interference signal according to the ICCI received from the first UE, and after reconstruction, the interference signal may be removed from the downlink signal mixed with the interference signal. Therefore, interference caused by an uplink signal sent by UE to receiving of a downlink signal by another UE may be cancelled. In this embodiment of the present invention, there is no need to limit receiving a downlink signal by the second UE serving as a receive end, or limit transmit power used when the first UE serves as a transmit end to send an uplink signal. Therefore, scheduling flexibility and freedom are not limited.

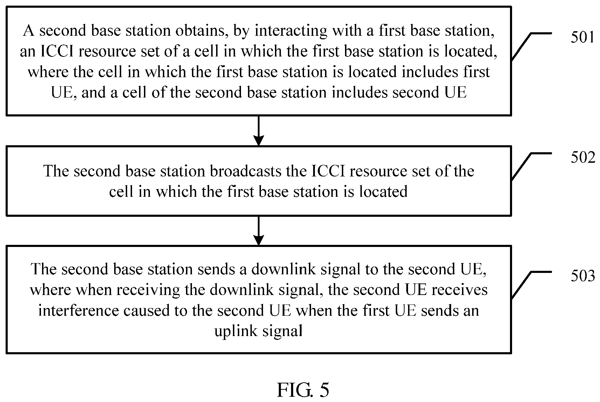

An interference cancellation method provided in the embodiments of the present invention is described in the foregoing embodiments, and another interference cancellation method provided in the embodiments of the present invention is described below. Referring to FIG. 5, an interference cancellation method provided in an embodiment of the present invention may include the following steps.

501. A second base station obtains, by interacting with a first base station, an ICCI resource set of a cell in which the first base station is located, where the cell in which the first base station is located includes first UE, and a cell in which the second base station is located includes second UE.

In this embodiment of the present invention, the second base station and the first base station are two neighboring base stations. The first UE is in the cell in which the first base station is located, and the second UE is in the cell in which the second base station is located. The second base station interacts with the first base station. The second base station sends, to the first base station, an ICCI resource set of the cell in which the second base station is located, and the second base station receives the ICCI resource set of the cell in which the first base station is located.

In some embodiments of the present invention, step 501 in which a second base station obtains, by interacting with a first base station, an ICCI resource set of a cell in which the first base station is located may specifically include the following step:
11. The second base station obtains, by using an X2 interface between the second base station and the first base station, the ICCI resource set of the cell in which the first base station is located.
12. Alternatively, the second base station obtains, by using a core network, the ICCI resource set of the cell in which the first base station is located.

In this embodiment of the present invention, an X2 interface may be further configured between the second base station and a neighboring base station (such as the first base station). Specifically, the first base station sends, to the second base station by using the X2 interface, the ICCI resource set of the cell in which the first base station is located, and the first base station receives, by using the X2 interface, the ICCI resource set that is of the cell in which the second base station is located and that is sent by the second base station. Likewise, the second base station receives, by using the X2 interface, the ICCI resource set of the cell in which the first base station is located, and the second base station sends, to the first base station by using the X2 interface, the ICCI resource set of the cell in which the first base station is located. Alternatively, a message may be transmitted between the first base station and the second base station by using the core network. After the second base station receives the ICCI resource set of the cell in which the first base station is located, the second base station broadcasts the ICCI resource set of the cell in which the first base station is located, and all UEs included in the cell in which the second base station is located can receive the ICCI resource set of the cell in which the first base station is located.

In some embodiments of the present invention, the interference cancellation method provided in this embodiment of the present invention may further include the following steps:
J1. The second base station broadcasts an ICCI resource set of the cell in which the second base station is located, where the cell in which the second base station is located further includes third UE and fourth UE.
J2. The second base station receives an uplink signal sent by the third UE, and the second base station sends a downlink signal to the fourth UE, where the uplink signal sent by the third UE causes interference to receiving of the downlink signal by the fourth UE.

That the second base station broadcasts the ICCI resource set of the cell in which the first base station is located is described in step 501. In some embodiments of the present invention, the second base station may further broadcast the ICCI resource set of the cell of the second base station, and both the third UE and the fourth UE included in the cell in which the second base station is located can receive the ICCI resource set of the cell in which the second base station is located. If the uplink signal sent by the third UE causes interference to receiving of the downlink signal by the fourth UE, the third UE may perform a method similar to the foregoing method performed by the first UE, and the fourth UE may perform a method similar to the foregoing method performed by the second UE. Therefore, the fourth UE may perform interference reconstruction according to configuration information included in ICCI sent by the third UE, so as to cancel interference between the third UE and the fourth UE.

In the embodiment in which step J1 and step J2 are performed, before step J2 in which the second base station broadcasts an ICCI resource set of the cell in which the second base station is located, the interference cancellation method provided in this embodiment of the present invention may further include the following step:
J3. The second base station configures an indication information resource in the ICCI resource set of the cell in which the second base station is located, where the indication information resource is used by the third UE to determine, according to whether to send ICCI, whether to send ICCI indication information on the indication information resource.

In some embodiments of the present invention, the second base station configures the indication information resource in the ICCI resource set of the cell in which the base station is located. The indication information resource is used by the third UE to determine, according to whether to send the ICCI, whether to send the ICCI indication information on the indication information resource. The second base station configures the indication information resource in the ICCI resource set. For example, the base station may configure the indication information resource at the very beginning of a time domain in the ICCI resource set.

In some embodiments of the present invention, the ICCI resource set of the cell in which the second base station is located may be obtained in the following manners.
1. The ICCI resource set is obtained by allocating some resources in an existing sidelink control message (English full name: Sidelink Control Information, SCI for short) resource set to ICCI for use. A sidelink control message resource may also be referred to as a D2D link resource. SCI is control information that is transmitted before D2D data in a D2D technology, and a function of the SCI is to provide information necessary for receiving the D2D data by receive end UE. In this implementation, the ICCI resource set is a part of the SCI resource set. For example, some time domain resources in the existing SCI resource set may be allocated to UE for sending the ICCI, and the some resources allocated to the ICCI are referred to as the ICCI resource set. Alternatively, some frequency domain resources in the existing SCI resource set are allocated to UE for sending the ICCI, and the some resources allocated to the ICCI are referred to as the ICCI resource set. Alternatively, some frequency domain resources that are in all frequency domain resources and that are corresponding to some time domain resources in the existing SCI resource set are allocated to UE for sending the ICCI, and the some resources allocated to the ICCI are referred to as the ICCI resource set.
   For example, time domain resources included in the SCI resource set are t₁, t₂, t₃, and t₄, and frequency domain resources included in the SCI resource set are f₁, f₂, f₃, and f₄. For example, an implementation includes: the frequency domain resources f₁ and f₂ that are in all the frequency domain resources and that are corresponding to the time domain resource t₁ in all the time domain resources may be allocated to the ICCI, the frequency domain resources f₃ and f₄ that are in all the frequency domain resources and that are corresponding to the time domain resource t₁ are allocated to the SCI, and all the frequency domain resources f₁, f₂, f₃, and f₄ corresponding to the time domain resources t₂, t₃, and t₄ are allocated to the SCI. Another implementation includes: the frequency domain resources f₁, f₂, and f₃ that are in all the frequency domain resources and that are corresponding to the time domain resource t₁ in all the time domain resources may be allocated to the ICCI, the frequency domain resources f₂ and f₃ that are in all the frequency domain resources and that are corresponding to the time domain resource t₃ in all the time domain resources are allocated to the ICCI, the frequency domain resource f₄ in all the frequency domain resources that is corresponding to the time domain resource t₁ is allocated to the SCI, the frequency domain resources f₁ and f₄ that are in all the frequency domain resources and that are corresponding to the time domain resource t₃ are allocated to the SCI, and all the frequency domain resources f₁, f₂, f₃, and f₄ corresponding to the time domain resources t₂ and t₄ are allocated to the SCI. It should be noted that the implementations are merely examples for description, and are not intended to limit the present invention. In practical application, another type of resource configuration manner may be used.
2. The ICCI resource set is obtained by allocating a resource other than an existing SCI resource set to ICCI for use, that is, the ICCI resource set and the existing SCI resource set are parallel. The two types of resources are different resources in a time domain or a frequency domain. A configuration manner of the ICCI resource set may be similar to a configuration manner of the existing SCI resource set. A difference lies in that, the configured ICCI resource set and the configured existing SCI resource set are distributed in completely different time domains or frequency domains. For example, the ICCI resource set and the existing SCI resource set are obtained by using different time domain resources. The ICCI resource set and the existing SCI resource set may be separate resources in the time domain. Resource overheads are increased when an ICCI resource set is additionally defined in addition to the original SCI resource set, but a network side has control over an additional ICCI resource.
3. The ICCI resource set multiplexes an SCI resource set, that is, no additional resource set needs to be defined for ICCI resources, and the ICCI resource set directly multiplexes the SCI resource set. In this way, no additional resource overheads are added, but SCI and ICCI need to be distinguished, that is, it is required to indicate, in a field in sent SCI/ICCI, whether the SCI or the ICCI is transmitted. The sent SCI/ICCI needs to carry a transmission indication, to indicate whether the SCI or the ICCI is transmitted currently. For example, existing SCI is transmitted to a particular target user, and a destination identifier is configured in the existing SCI. ICCI has no particular target user, and therefore, a field that is in the SCI and in which the destination identifier is located may be modified. When the field is set to a special reserved bit string (for example, a value of the bit string is all 0s or all Is), it indicates that the ICCI is transmitted in a subframe.

502. The second base station broadcasts the ICCI resource set of the cell in which the first base station is located.

In this embodiment of the present invention, after the second base station obtains the ICCI resource set of the cell in which the first base station is located, the second base station broadcasts the ICCI resource set of the cell in which the first base station is located, and all the UEs in the cell in which the second base station is located can receive the ICCI resource set of the cell in which the first base station is located, for example, the second UE included in the cell in which the second base station is located receives the ICCI resource set of the cell in which the first base station is located.

503. The second base station sends a downlink signal to the second UE, where when receiving the downlink signal, the second UE receives interference caused to the second UE when the first UE sends an uplink signal.

In this embodiment of the present invention, after the second base station broadcasts the ICCI resource set of the cell in which the first base station is located, the second UE included in the cell in which the second base station is located can receive the ICCI resource set of the cell in which the first base station is located. The second UE blindly detects ICCI carried on a D2D link on an ICCI resource in the ICCI resource set of the cell in which the first base station is located, so that the second UE can obtain ICCI sent by the first UE. The second base station sends the downlink signal to the second UE. When receiving the downlink signal, the second UE receives the interference caused to the second UE when the first UE sends the uplink signal. In this embodiment of the present invention, the second base station does not need to cancel sending of the downlink signal to the second UE even if there is interference between the second UE and the first UE. Therefore, there is no need to limit a downlink scheduling behavior of a base station.

It can be learned from the description of the present invention in the foregoing embodiment that, the second base station obtains, by interacting with the first base station, the ICCI resource set of the cell in which the first base station is located. The cell in which the first base station is located includes the first UE, and the cell in which the second base station is located includes the second UE. The second base station broadcasts the ICCI resource set of the cell in which the first base station is located. The second base station sends the downlink signal to the second UE, and when receiving the downlink signal, the second UE receives the interference caused to the second UE when the first UE sends the uplink signal. The second UE receives the downlink signal and an interference signal mixed in the downlink signal, and then the second UE reconstructs, according to configuration information included in the ICCI, the interference caused to the second UE when the first UE sends the uplink signal, to obtain the interference signal. The second UE removes the interference signal from the downlink signal mixed with the interference signal, to obtain an original downlink signal sent by a base station to which the second UE belongs. In this embodiment of the present invention, the second UE may reconstruct the interference signal according to the ICCI received from the first UE, and after reconstruction, the interference signal may be removed from the downlink signal mixed with the interference signal. Therefore, interference caused by an uplink signal sent by UE to receiving of a downlink signal by another UE may be cancelled. In this embodiment of the present invention, there is no need to limit receiving a downlink signal by the second UE serving as a receive end, or limit transmit power used when the first UE serves as a transmit end to send an uplink signal. Therefore, scheduling flexibility and freedom are not limited.

To better understand and implement the foregoing solutions in the embodiments of the present invention, a corresponding application scenario is used as an example below for detailed description. The embodiments of the present invention may be applied to the following scenarios: a scenario in which uplink and downlink subframes are flexibly configured in a TDD mode of LTE, an intra-frequency full-duplex scenario, and another scenario in which transmit end UE may interfere with receiving performed by another UE. In the embodiments of the present invention, transmit end UE cancels, by using D2D communications technologies, interference caused by the transmit end UE to receive end UE.

An application scenario of an intra-frequency full-duplex technology in an embodiment of the present invention is first described. UE 1 is the first UE, and UE 2 is the second UE. A base station to which the UE 1 belongs and a base station to which the UE 2 belongs are the same base station. The UE 1 and the UE 2 are in a cell of the same base station (English name: eNodeB). This scenario is also referred to as an intra-base station (English name: Intra-eNodeB) scenario. As shown in FIG. 6-a, FIG. 6-a is a schematic diagram of a process of interaction between UE 1 and UE 2 in an intra-eNodeB scenario according to an embodiment of the present invention. This embodiment may occur in an intra-frequency full-duplex scenario in which a base station 1 is about to send a downlink signal to the UE 2, and receive an uplink signal from the UE 1 at the same time. The base station 1 allocates a corresponding resource pool to ICCI, and broadcasts, in a cell, information about the ICCI resource pool by using a system information block (English full name: System Information Block, SIB for short), so that UE in the cell can listen to and attempt to blindly detect ICCI in the resource pool.

To prevent the uplink signal transmitted by the UE 1 from interfering with receiving of the downlink signal by the UE 2, the base station 1 allocates a resource in the ICCI resource pool to the UE 1, so that the UE 1 transmits ICCI. After obtaining information about the allocated ICCI resource, the UE 1 sends the ICCI on the allocated ICCI resource. Content carried in the ICCI includes but is not limited to information about a resource used for an interference signal and an MCS used for an interference signal. After obtaining, by means of blind detection from the ICCI resource pool, the ICCI sent by the UE 1, the UE 2 can obtain related information of an interference signal that is about to be sent from the UE 1. Then the base station 1 sends the downlink signal to the UE 2, and at the same time, receives the uplink signal sent by the UE 1. In this case, transmission performed by the UE 1 causes interference to receiving performed by the UE 2. However, the UE 2 may obtain, by means of parsing, and reconstruct this part of interference signal by using configuration information in the received ICCI, and remove the interference signal from the downlink signal mixed with the interference signal, to obtain an original downlink signal sent by the base station 1, so that cancellation of interference between UEs is completed.

In the foregoing implementation process, the ICCI resource pool may be configured in different manners described below.
(1) The ICCI resource pool is obtained by allocating some resources in an existing SCI resource pool to ICCI for use, for example, the ICCI resource pool is obtained by allocating a time domain resource or a frequency domain resource to the ICCI for use, where the time domain resource or the frequency domain resource is taken from the existing SCI resource pool. Therefore, the ICCI resource pool and the SCI resource pool are staggered in a time domain or a frequency domain. In a D2D technology, D2D SCI is a type of control information that is transmitted before D2D data, and a function of the D2D SCI is to provide information necessary for receiving the D2D data by receive end UE. In D2D technology, an SCI resource pool is allocated to the SCI for transmitting the SCI. Therefore, some resources may be taken from the original SCI resource pool and are used as the ICCI resource pool. An example in which a time domain resource in the SCI resource pool is allocated to ICCI for use is used below. As shown in FIG. 6-b, FIG. 6-b is a schematic diagram of an implementation of staggering, in a time domain, an ICCI resource pool and an SCI resource pool. Seen from a direction of a time axis, resources distributed between two dashed lines are all time domain resources in the SCI resource pool. Some time domain resources are taken from all the time domain resources and are allocated to the ICCI for use, and the time domain resources used for the ICCI become ICCI resources. Time domain resources, in all the time domain resources, that are allocated to the SCI for use become SCI resources.
(2) The ICCI resource pool is obtained by allocating resources other than an existing SCI resource pool to ICCI for use. For example, the ICCI resource pool and the SCI resource pool occupy different time domain resources or frequency domain resources. Therefore, the ICCI resource pool and the SCI resource pool are staggered in a time domain or a frequency domain. In a D2D technology, D2D SCI is a type of control information that is transmitted before D2D data, and a function of the D2D SCI is to provide information necessary for receiving the D2D data by receive end UE. In D2D technology, an SCI resource pool is allocated to the SCI for transmitting the SCI. Therefore, resources other than the original SCI resource pool may be used as the ICCI resource pool. An example in which time domain resources other than the SCI resource pool are allocated to ICCI for use is used below. As shown in FIG. 6-c, FIG. 6-c is a schematic diagram of another implementation of staggering, in a time domain, an ICCI resource pool and an SCI resource pool. Seen from a left-to-right direction of a time axis, resources between a dashed line a and a dashed line b are time domain resources in the SCI resource pool, and resources between the dashed line b and a dashed line c are resources other than the SCI resource pool. Therefore, resources between the dashed line b and the dashed line c can be configured for the ICCI for use, and the time domain resources configured for the ICCI for use become ICCI resources. A manner in which an ICCI resource pool is additionally defined in addition to the original SCI resource pool increases resource overheads, but a network side has control over an additional ICCI resource, and can determine, according to a requirement, how many resources are to be allocated to the ICCI resource pool. In addition, because load of the ICCI is equivalent to that of the SCI, and one piece of SCI currently occupies only one physical resource block (English full name: Physical Resource Block, PRB for short) pair, that is, occupies 168 resource elements (English full name: Resource Element, RE for short), a quantity of resources occupied by one piece of ICCI does not exceed one PRB pair, and resource overheads are not high.
(3) The ICCI resource pool completely multiplexes an SCI resource pool. In this manner, no additional resource pool needs to be defined for ICCI. Therefore, no additional resource overhead needs to be added. However, when the ICCI resource pool multiplexes the SCI resource pool, SCI and ICCI need to be distinguished by using a specific message field in the SCI. A feasible method is as follows: Existing SCI is transmitted to a particular target user, and a destination identifier is configured in the existing SCI. ICCI has no particular target user, and therefore, a field that is in the SCI and in which the destination identifier is located may be modified. Therefore, it may be specified that when the field is set to a special reserved bit string, it indicates that the ICCI is transmitted in a subframe. Referring to FIG. 6-d, FIG. 6-d is a schematic diagram of an implementation of multiplexing an SCI resource pool by an ICCI resource pool.

In some embodiments of the present invention, the UE 1 may determine whether there is a need to transmit the ICCI. If the transmit end UE does not cause severe interference to receiving performed by another UE, the UE may choose not to transmit the ICCI. In this way, not only resources can be saved, but also power consumption of the UE can be reduced. Referring to FIG. 6-e, FIG. 6-e is a schematic diagram of an implementation in which UE 1 determines whether to send ICCI and obtains an ICCI resource according to an embodiment of the present invention. The UE 2 that is about to receive the downlink signal sends a particular reference signal. The UE 1 that is about to transmit the uplink signal finds, by measuring the reference signal, that the uplink signal sent by the UE 1 causes severe interference to receiving performed by the UE 2. In this case, the UE 1 may determine to transmit the ICCI, and apply to the base station 1 for an ICCI resource. The base station 1 allocates an ICCI resource in the ICCI resource pool to the UE 1, and then the UE 1 transmits the ICCI on the ICCI resource allocated by the base station 1.

In some embodiments of the present invention, the UE 2 serves as a receive end and may determine whether there is a need to blindly detect ICCI. Referring to FIG. 6-f, FIG. 6-f is a schematic diagram of an implementation in which UE 2 determines, based on an indication information resource, whether to blindly detect ICCI according to an embodiment of the present invention. An indication information resource may also be referred to as a sentinel resource. The base station 1 may configure a corresponding sentinel resource at the very beginning of a time domain in the ICCI resource pool. Whether UE sends ICCI in the ICCI resource pool is indicated by using ICCI indication information on the sentinel resource. The UE 2 determines, by detecting whether the ICCI indication information is on the sentinel resource, whether to further blindly detect ICCI in the ICCI resource pool. For example, the UE 1 that needs to send the ICCI sends the ICCI indication information on the sentinel resource, and the UE 2 determines, by detecting whether the ICCI indication information is on the sentinel resource, whether UE sends ICCI in the ICCI resource pool. If the UE 2 detects no ICCI indication information on the sentinel resource, it indicates that the UE 2 does not need to blindly detect ICCI in the ICCI resource pool. When the ICCI indication information is on the sentinel resource, it indicates that ICCI is to be transmitted in the ICCI resource pool. In this case, the UE 2 needs to further blindly detect ICCI in a subsequent ICCI resource pool. Whether the UE 2 needs to further blindly detect ICCI in the subsequent resource pool is indicated according to whether the ICCI indication information is sent on the sentinel resource, so that power consumption of the UE 2 and complexity of blind detection may be reduced.

It can be learned from the description in the foregoing examples, in this embodiment of the present invention, a method for cancelling interference between UEs in an intra-eNodeB scenario may be completed by using a D2D link. Interfering source UE in the intra-eNodeB scenario sends ICCI to interfered UE by means of D2D communication, so as to indicate, to the interfered UE, information necessary for receiving an interference signal. After receiving and reconstructing the interference signal according to configuration information included in the ICCI, the interfered UE removes the interference signal from the received downlink signal, so as to cancel interference between the UEs.

An application scenario in which uplink and downlink subframes are flexibly configured in a TDD mode of LTE is described below. An interference cancellation method provided in the embodiments of the present invention may be applied to an LTE system. UE 1 is the first UE, and UE 2 is the second UE. A base station to which the UE 1 belongs is a base station 1, and a base station to which the UE 2 belongs is a base station 2. An architecture of the LTE system is shown in FIG. 7-a. The base station 1 and the base station 2 are connected by using an X2 interface, the base station 1 and a mobility management entity (English full name: Mobility Management Entity, MME for short) 1/serving gateway (English full name: Serving-GateWay, S-GW for short) 1 are connected by using an S1 interface, and the base station 2 and an MME 2/S-GW 2 are connected by using an S1 interface.

The UE 1 and the UE 2 are in cells of different base stations. This scenario is also referred to as an inter-base station (English name: Inter-eNodeB) scenario. As shown in FIG. 7-b, FIG. 7-b is a schematic diagram of a process of interaction between UE 1 and UE 2 in an inter-eNodeB scenario according to an embodiment of the present invention. This embodiment may occur in a scenario in which uplink and downlink subframes are flexibly configured in TDD LTE, the base station 2 is about to send a downlink signal to the UE 2, and the base station 1 in a neighboring cell is about to receive an uplink signal from the UE 1 at the same time. The base station 1 and the base station 2 each allocate a corresponding resource pool to ICCI, and exchange information about respective ICCI resource pools. The interaction may be performed by using an X2 interface, or may be performed by using a core network. This is not limited herein.

After obtaining the information about the ICCI resource pool of the base station 1 in the neighboring cell, the base station 2 broadcasts, in a cell of the base station 2, the information about the ICCI resource pool of the neighboring cell by using a SIB, so that UE in the cell of the base station 2 can listen to and attempt to blindly detect, in the ICCI resource pool of the neighboring cell, ICCI from UE in the neighboring cell. To prevent the uplink signal transmitted by the UE 1 from interfering with receiving of the downlink signal by the UE 2 in a neighboring cell, the base station 1 allocates a resource in the ICCI resource pool of the cell of the base station 1 to the UE 1, so that the UE 1 transmits ICCI. After obtaining information about the allocated ICCI resource, the UE 1 sends the ICCI on the allocated ICCI resource. Content carried in the ICCI includes but is not limited to information about a resource used for an interference signal and an MCS used for an interference signal. After obtaining, by means of blind detection from the ICCI resource pool of the neighboring cell, the ICCI sent by the UE 1, the UE 2 can obtain, by means of parsing, related information of an interference signal that is about to be sent by the UE 1. Then the base station 2 sends the downlink signal to the UE 2, and the UE 1 sends the uplink signal to the base station 1 at the same time. In this case, the uplink signal sent by the UE 1 causes interference to receiving of the downlink signal by the UE 2 in the neighboring cell. However, the UE 2 may obtain, by means of parsing, and reconstruct this part of interference signal by using configuration information included in the received ICCI, and remove the interference signal from the received downlink signal, to obtain an original downlink signal sent by the base station 2, so that cancellation of interference between UEs is completed.

Different from the foregoing embodiment, when ICCI is transmitted and received between neighboring cells, base stations in the neighboring cells need to exchange respective ICCI resource pools, and broadcast, in respective cells, the ICCI resource pools used in the respective neighboring cells, so that UE in one cell can listen to and blindly detect ICCI from UE in the neighboring cell.

It can be learned from the foregoing examples in the present invention, in this embodiment of the present invention, a method for cancelling interference between UEs in an inter-eNodeB scenario is completed by means of D2D communication. Interfering source UE in the inter-eNodeB scenario sends ICCI to interfered UE by means of D2D communication, so as to indicate, to the interfered UE, information necessary for receiving an interference signal. After receiving and reconstructing the interference signal according to content included in the ICCI, the interfered UE removes the interference signal from the received downlink signal, so as to cancel interference between the UEs. Compared with the prior art, in the method proposed in the present invention, interference between UEs is cancelled without limiting scheduling flexibility and freedom or affecting communication quality of interfering source UE.

It should be noted that, for brief description, the foregoing method embodiments are represented as a series of actions. However, persons skilled in the art should appreciate that the present invention is not limited to the described order of the actions, because according to the present invention, some steps may be performed in other orders or simultaneously. In addition, persons skilled in the art should also appreciate that all the embodiments described in the specification are merely examples of embodiments, and the related actions and modules are not necessarily mandatory to the present invention.

To better implement the foregoing solutions in the embodiments of the present invention, a related apparatus used to implement the foregoing solutions is further provided below.

Referring to FIG. 8-a, an embodiment of the present invention provides first UE 800. There is a D2D link between the first UE and second UE, and the first UE 800 may include an ICCI sending module 801 and an uplink signal sending module 802.

The ICCI sending module 801 is configured to send an ICCI to the second UE by using the D2D link. The ICCI includes information about a configuration used for sending an uplink signal by the first UE.

The uplink signal sending module 802 is configured to: after the ICCI sending module sends the ICCI, send, according to the configuration information included in the ICCI, the uplink signal to a base station to which the first UE belongs. The uplink signal sent by the first UE causes interference to receiving, by the second UE, of a downlink signal sent by a base station to which the second UE belongs.

In some embodiments of the present invention, referring to FIG. 8-b, the first UE 800 further includes a measurement module 803, configured to: before the ICCI sending module 801 sends the ICCI to the second UE by using the device-to-device D2D link, receive, by using the D2D link, a reference signal sent by the second UE; measure the reference signal; determine, according to an obtained measurement result, whether the interference caused by the uplink signal sent by the first UE to receiving, by the second UE, of the downlink signal sent by the base station to which the second UE belongs is greater than a preset interference level; and trigger performing of the ICCI sending module if the interference caused by the uplink signal sent by the first UE to receiving, by the second UE, of the downlink signal sent by the base station to which the second UE belongs is greater than the preset interference level.

In some embodiments of the present invention, referring to FIG. 8-c, the ICCI sending module 801 includes:
a receiving submodule 8011, configured to receive control information sent by the base station to which the first UE belongs; and
a sending submodule 8012, configured to send, by using the D2D link, the ICCI to the second UE on an ICCI resource indicated by the control information.

In some embodiments of the present invention, the ICCI sending module is further configured to: before sending the ICCI to the second UE by using the device-to-device D2D link, send ICCI indication information on an indication information resource in an ICCI resource set broadcast by the base station to which the first UE belongs. The ICCI indication information is used by the second UE to determine, according to whether the ICCI indication information is sent on the indication information resource, whether UE other than the second UE sends ICCI on an ICCI resource in the ICCI resource set.

It should be noted that content such as information exchange between the modules/units of the apparatus and the performing processes thereof is based on the same idea as the method embodiments of the present invention, and produces the same technical effects as the method embodiments of the present invention. For specific content, reference may be made to the description in the method embodiments of the present invention, and details are not described herein again.

It can be learned from the description of the present invention in the foregoing embodiment that, the first UE sends the ICCI to the second UE by using the D2D link, and the ICCI includes the information about the configuration used for sending the uplink signal by the first UE. The second UE can receive, by using the D2D link, the ICCI sent by the first UE. After the first UE sends the ICCI, the first UE sends the uplink signal to the base station to which the first UE belongs, and the uplink signal sent by the first UE causes the interference to receiving, by the second UE, of the downlink signal sent by the base station to which the second UE belongs. The second UE receives the downlink signal and an interference signal mixed in the downlink signal, and then the second UE reconstructs, according to the configuration information included in the ICCI, the interference caused to the second UE when the first UE sends the uplink signal, to obtain the interference signal. The second UE removes the interference signal from the downlink signal mixed with the interference signal, to obtain an original downlink signal sent by the base station to which the second UE belongs. In this embodiment of the present invention, the second UE may reconstruct the interference signal according to the ICCI received from the first UE, and after reconstruction, the interference signal may be removed from the downlink signal mixed with the interference signal. Therefore, interference caused by an uplink signal sent by UE to receiving of a downlink signal by another UE may be cancelled. In this embodiment of the present invention, there is no need to limit receiving a downlink signal by the second UE serving as a receive end, or limit transmit power used when the first UE serves as a transmit end to send an uplink signal. Therefore, scheduling flexibility and freedom are not limited.

Referring to FIG. 9-a, an embodiment of the present invention provides second UE 900. There is a D2D link between the second UE and first UE, and the second UE 900 may include an ICCI receiving module 901, a signal receiving module 902, an interference reconstruction module 903, and a signal restoration module 904.

The ICCI receiving module 901 is configured to receive, by using the D2D link, an ICCI sent by the first UE. The ICCI includes information about a configuration used for sending an uplink signal by the first UE.

The signal receiving module 902 is configured to receive a downlink signal sent by a base station to which the second UE belongs and an interference signal mixed in the downlink signal. The interference signal is interference that is caused to the second UE when the first UE sends the uplink signal and that is received by the second UE when the second UE receives the downlink signal.

The interference reconstruction module 903 is configured to reconstruct, according to the configuration information included in the ICCI, the interference that is caused to the second UE when the first UE sends the uplink signal, to obtain the interference signal.

The signal restoration module 904 is configured to remove the interference signal from the downlink signal mixed with the interference signal, to obtain an original downlink signal sent by the base station to which the second UE belongs.

In some embodiments of the present invention, referring to FIG. 9-b, the second UE 900 further includes a signal sending module 905, configured to: before the ICCI receiving module 901 receives, by using the D2D link, the ICCI sent by the first UE, send a reference signal to the first UE by using the D2D link.

In some embodiments of the present invention, referring to FIG. 9-c, the ICCI receiving module 901 includes:
a receiving submodule 9011, configured to receive an ICCI resource set broadcast by the base station to which the second UE belongs; and
a detection submodule 9012, configured to blindly detect ICCI carried on the D2D link on an ICCI resource in the ICCI resource set.

In some embodiments of the present invention, referring to FIG. 9-d, the ICCI receiving module 901 further includes a learning submodule 9013, configured to: after the receiving submodule 9011 receives the ICCI resource set broadcast by the base station to which the second UE belongs, learn whether an indication information resource in the ICCI resource set carries ICCI indication information; and if the indication information resource does not carry the ICCI indication information, determine that there is no need to blindly detect ICCI carried on the D2D link on an ICCI resource in the ICCI resource set; or trigger performing of the detection submodule if the indication information resource carries the ICCI indication information.

It should be noted that content such as information exchange between the modules/units of the apparatus and the performing processes thereof is based on the same idea as the method embodiments of the present invention, and produces the same technical effects as the method embodiments of the present invention. For specific content, reference may be made to the description in the method embodiments of the present invention, and details are not described herein again.

It can be learned from the description of the present invention in the foregoing embodiment that, the first UE sends the ICCI to the second UE by using the D2D link, and the ICCI includes the information about the configuration used for sending the uplink signal by the first UE. The second UE can receive, by using the D2D link, the ICCI sent by the first UE. After the first UE sends the ICCI, the first UE sends the uplink signal to a base station to which the first UE belongs, and the uplink signal sent by the first UE causes the interference to receiving, by the second UE, of the downlink signal sent by the base station to which the second UE belongs. The second UE receives the downlink signal and the interference signal mixed in the downlink signal, and then the second UE reconstructs, according to the configuration information included in the ICCI, the interference caused to the second UE when the first UE sends the uplink signal, to obtain the interference signal. The second UE removes the interference signal from the downlink signal mixed with the interference signal, to obtain an original downlink signal sent by the base station to which the second UE belongs. In this embodiment of the present invention, the second UE may reconstruct the interference signal according to the ICCI received from the first UE, and after reconstruction, the interference signal may be removed from the downlink signal mixed with the interference signal. Therefore, interference caused by an uplink signal sent by UE to receiving of a downlink signal by another UE may be cancelled. In this embodiment of the present invention, there is no need to limit receiving a downlink signal by the second UE serving as a receive end, or limit transmit power used when the first UE serves as a transmit end to send an uplink signal. Therefore, scheduling flexibility and freedom are not limited.

Referring to FIG. 10-a, an embodiment of the present invention provides a first base station 1000, and the first base station 1000 may include a broadcast module 1001, a receiving module 1002, and a sending module 1003.

The broadcast module 1001 is configured to broadcast an ICCI resource set of a cell in which the first base station is located. The cell in which the first base station is located includes first user equipment UE and second UE.

The receiving module 1002 is configured to receive an uplink signal sent by the first UE.

The sending module 1003 is configured to send a downlink signal to the second UE when the receiving module receives the uplink signal sent by the first UE. The uplink signal sent by the first UE causes interference to receiving of the downlink signal by the second UE.

In some embodiments of the present invention, referring to FIG. 10-b, the first base station 1000 further includes a configuration module 1004, configured to: before the broadcast module 1001 broadcasts the ICCI resource set of the cell in which the first base station is located, configure an indication information resource in the ICCI resource set of the cell in which the first base station is located. The indication information resource is used by the first UE to determine, according to whether to send ICCI, whether to send ICCI indication information on the indication information resource.

In some embodiments of the present invention, referring to FIG. 10-c, the first base station 1000 further includes an interaction module 1005.

The interaction module 1005 is configured to obtain, by interacting with a second base station, an ICCI resource set of a cell in which the second base station is located.

The broadcast module 1001 is further configured to broadcast the ICCI resource set of the cell in which the second base station is located, so that the second UE blindly detects whether UE included in the cell in which the second base station is located sends ICCI on an ICCI resource in the ICCI resource set of the cell in which the second base station is located.

It should be noted that content such as information exchange between the modules/units of the apparatus and the performing processes thereof is based on the same idea as the method embodiments of the present invention, and produces the same technical effects as the method embodiments of the present invention. For specific content, reference may be made to the description in the method embodiments of the present invention, and details are not described herein again.

It can be learned from the description of the present invention in the foregoing embodiment that, the first base station broadcasts the ICCI resource set of the cell in which the first base station is located, and the cell in which the first base station is located includes the first user equipment UE and the second UE. The first base station receives the uplink signal sent by the first UE, and the first base station sends the downlink signal to the second UE. The uplink signal sent by the first UE causes the interference to receiving of the downlink signal by the second UE. The second UE receives the downlink signal and an interference signal mixed in the downlink signal, and then the second UE reconstructs, according to configuration information included in ICCI, the interference caused to the second UE when the first UE sends the uplink signal, to obtain the interference signal. The second UE removes the interference signal from the downlink signal mixed with the interference signal, to obtain an original downlink signal sent by a base station to which the second UE belongs. In this embodiment of the present invention, the second UE may reconstruct the interference signal according to the ICCI received from the first UE, and after reconstruction, the interference signal may be removed from the downlink signal mixed with the interference signal. Therefore, interference caused by an uplink signal sent by UE to receiving of a downlink signal by another UE may be cancelled. In this embodiment of the present invention, there is no need to limit receiving a downlink signal by the second UE serving as a receive end, or limit transmit power used when the first UE serves as a transmit end to send an uplink signal. Therefore, scheduling flexibility and freedom are not limited.

Referring to FIG. 11-a, an embodiment of the present invention provides a second base station 1100, and the second base station 1100 may include an interaction module 1101, a broadcast module 1102, and a sending module 1103.

The interaction module 1101 is configured to obtain, by interacting with a first base station, an ICCI resource set of a cell in which the first base station is located. The cell in which the first base station is located includes first user equipment UE, and a cell in which the second base station is located includes second UE.

The broadcast module 1102 is configured to broadcast the ICCI resource set of the cell in which the first base station is located.

The sending module 1103 is configured to send a downlink signal to the second UE. When receiving the downlink signal, the second UE receives interference caused to the second UE when the first UE sends an uplink signal.

In some embodiments of the present invention, the interaction module 1101 is specifically configured to: obtain, by using an X2 interface between the second base station and the first base station, the ICCI resource set of the cell in which the first base station is located; or obtain, by using a core network, the ICCI resource set of the cell in which the first base station is located.

In some embodiments of the present invention, referring to FIG. 11-b, the second base station 1100 further includes a receiving module 1104.

The broadcast module 1102 is further configured to broadcast an ICCI resource set of the cell in which the second base station is located. The cell in which the second base station is located further includes third UE and fourth UE.

The receiving module 1104 is configured to receive an uplink signal sent by the third UE.

The sending module 1103 is further configured to send a downlink signal to the fourth UE when the receiving module receives the uplink signal sent by the third UE. The uplink signal sent by the third UE causes interference to receiving of the downlink signal by the fourth UE.

In some embodiments of the present invention, referring to FIG. 11-c, the second base station 1100 further includes a configuration module 1105, configured to: before the broadcast module 1102 broadcasts the ICCI resource set of the cell in which the second base station is located, configure an indication information resource in the ICCI resource set of the cell in which the second base station is located. The indication information resource is used by the third UE to determine, according to whether to send ICCI, whether to send ICCI indication information on the indication information resource.

It can be learned from the description of the present invention in the foregoing embodiment that, the second base station obtains, by interacting with the first base station, the ICCI resource set of the cell in which the first base station is located. The cell in which the first base station is located includes the first UE, and the cell in which the second base station is located includes the second UE. The second base station broadcasts the ICCI resource set of the cell in which the first base station is located. The second base station sends the downlink signal to the second UE, and when receiving the downlink signal, the second UE receives the interference caused to the second UE when the first UE sends the uplink signal. The second UE receives the downlink signal and an interference signal mixed in the downlink signal, and then the second UE reconstructs, according to configuration information included in ICCI, the interference caused to the second UE when the first UE sends the uplink signal, to obtain the interference signal. The second UE removes the interference signal from the downlink signal mixed with the interference signal, to obtain an original downlink signal sent by a base station to which the second UE belongs. In this embodiment of the present invention, the second UE may reconstruct the interference signal according to the ICCI received from the first UE, and after reconstruction, the interference signal may be removed from the downlink signal mixed with the interference signal. Therefore, interference caused by an uplink signal sent by UE to receiving of a downlink signal by another UE may be cancelled. In this embodiment of the present invention, there is no need to limit receiving a downlink signal by the second UE serving as a receive end, or limit transmit power used when the first UE serves as a transmit end to send an uplink signal. Therefore, scheduling flexibility and freedom are not limited.

It should be noted that content such as information exchange between the modules/units of the apparatus and the performing processes thereof is based on the same idea as the method embodiments of the present invention, and produces the same technical effects as the method embodiments of the present invention. For specific content, reference may be made to the description in the method embodiments of the present invention, and details are not described herein again.

An embodiment of the present invention provides a computer storage medium. The computer storage medium stores a program, and the program performs some or all of steps described in the foregoing method embodiments.

Another first UE provided in an embodiment of the present invention is described below. Referring to FIG. 12, first UE 1200 includes:
an input apparatus 1201, an output apparatus 1202, a processor 1203, and a memory 1204 (there may be one or more processors 1203 in the first UE 1200, and one processor is used as an example in FIG. 12). In some embodiments of the present invention, the input apparatus 1201, the output apparatus 1202, the processor 1203, and the memory 1204 may be connected by using a bus or in another manner. In FIG. 12, connection by using a bus is used as an example.

The processor 1203 is configured to perform an interference cancellation method performed by the foregoing first UE. Specifically, the processor 1203 is configured to perform the following steps:
sending an ICCI to second UE by using a device-to-device D2D link, where the ICCI includes information about a configuration used for sending an uplink signal by the first UE; and
sending, after sending the ICCI, the uplink signal to a base station to which the first UE belongs, where the uplink signal sent by the first UE causes interference to receiving, by the second UE, of a downlink signal sent by a base station to which the second UE belongs.

In some embodiments of the present invention, the processor 1203 is further configured to perform the following steps:
before sending the ICCI to the second UE by using the device-to-device D2D link, receiving, by using the D2D link, a reference signal sent by the second UE;
measuring the reference signal, and determining, according to an obtained measurement result, whether the interference caused by the uplink signal sent by the first UE to receiving, by the second UE, of the downlink signal sent by the base station to which the second UE belongs is greater than a preset interference level; and
if the interference caused by the uplink signal sent by the first UE to receiving, by the second UE, of the downlink signal sent by the base station to which the second UE belongs is greater than the preset interference level, triggering performing of the step of sending an ICCI to second UE by using a device-to-device D2D link.

In some embodiments of the present invention, the processor 1203 is specifically configured to perform the following steps:
receiving control information sent by the base station to which the first UE belongs; and
sending, by using the D2D link, the ICCI to the second UE on an ICCI resource indicated by the control information.

In some embodiments of the present invention, the processor 1203 is further configured to perform the following step: before sending the ICCI to the second UE by using the device-to-device D2D link, sending ICCI indication information on an indication information resource in an ICCI resource set broadcast by the base station to which the first UE belongs, where the ICCI indication information is used by the second UE to determine, according to whether the ICCI indication information is sent on the indication information resource, whether UE other than the second UE sends ICCI on an ICCI resource in the ICCI resource set.

It can be learned from the description of the present invention in the foregoing embodiment that, the first UE sends the ICCI to the second UE by using the D2D link, and the ICCI includes the information about the configuration used for sending the uplink signal by the first UE. The second UE can receive, by using the D2D link, the ICCI sent by the first UE. After the first UE sends the ICCI, the first UE sends the uplink signal to the base station to which the first UE belongs, and the uplink signal sent by the first UE causes the interference to receiving, by the second UE, of the downlink signal sent by the base station to which the second UE belongs. The second UE receives the downlink signal and an interference signal mixed in the downlink signal, and then the second UE reconstructs, according to the configuration information included in the ICCI, the interference caused to the second UE when the first UE sends the uplink signal, to obtain the interference signal. The second UE removes the interference signal from the downlink signal mixed with the interference signal, to obtain an original downlink signal sent by the base station to which the second UE belongs. In this embodiment of the present invention, the second UE may reconstruct the interference signal according to the ICCI received from the first UE, and after reconstruction, the interference signal may be removed from the downlink signal mixed with the interference signal. Therefore, interference caused by an uplink signal sent by UE to receiving of a downlink signal by another UE may be cancelled. In this embodiment of the present invention, there is no need to limit receiving a downlink signal by the second UE serving as a receive end, or limit transmit power used when the first UE serves as a transmit end to send an uplink signal. Therefore, scheduling flexibility and freedom are not limited.

Another second UE provided in an embodiment of the present invention is described below. Referring to FIG. 13, second UE 1300 includes:
an input apparatus 1301, an output apparatus 1302, a processor 1303, and a memory 1304 (there may be one or more processors 1303 in the second UE 1300, and one processor is used as an example in FIG. 13). In some embodiments of the present invention, the input apparatus 1301, the output apparatus 1302, the processor 1303, and the memory 1304 may be connected by using a bus or in another manner. In FIG. 13, connection by using a bus is used as an example.

The processor 1303 is configured to perform an interference cancellation method performed by the foregoing second UE. Specifically, the processor 1303 is configured to perform the following steps:
receiving, by using a device-to-device D2D link, an ICCI sent by first UE, where the ICCI includes information about a configuration used for sending an uplink signal by the first UE;
receiving a downlink signal sent by a base station to which the second UE belongs and an interference signal mixed in the downlink signal, where the interference signal is interference that is caused to the second UE when the first UE sends the uplink signal and that is received by the second UE when the second UE receives the downlink signal;
reconstructing, according to the configuration information included in the ICCI, the interference that is caused to the second UE when the first UE sends the uplink signal, to obtain the interference signal; and
removing the interference signal from the downlink signal mixed with the interference signal, to obtain an original downlink signal sent by the base station to which the second UE belongs.

In some embodiments of the present invention, the processor 1303 is further configured to perform the following step:
before receiving, by using the device-to-device D2D link, the ICCI sent by the first UE, sending a reference signal to the first UE by using the D2D link.

In some embodiments of the present invention, the processor 1303 is specifically configured to perform the following steps:
receiving an ICCI resource set broadcast by the base station to which the second UE belongs; and
blindly detecting ICCI carried on the D2D link on an ICCI resource in the ICCI resource set.

In some embodiments of the present invention, the processor 1303 is further configured to perform the following steps:
after receiving the ICCI resource set broadcast by the base station to which the second UE belongs, learning whether an indication information resource in the ICCI resource set carries ICCI indication information; and
if the indication information resource does not carry the ICCI indication information, determining that there is no need to blindly detect ICCI carried on the D2D link on an ICCI resource in the ICCI resource set; or if the indication information resource carries the ICCI indication information, triggering performing of the step of blindly detecting ICCI carried on the D2D link on an ICCI resource in the ICCI resource set.

It can be learned from the description of the present invention in the foregoing embodiment that, the first UE sends the ICCI to the second UE by using the D2D link, and the ICCI includes the information about the configuration used for sending the uplink signal by the first UE. The second UE can receive, by using the D2D link, the ICCI sent by the first UE. After the first UE sends the ICCI, the first UE sends the uplink signal to a base station to which the first UE belongs, and the uplink signal sent by the first UE causes the interference to receiving, by the second UE, of the downlink signal sent by the base station to which the second UE belongs. The second UE receives the downlink signal and the interference signal mixed in the downlink signal, and then the second UE reconstructs, according to the configuration information included in the ICCI, the interference caused to the second UE when the first UE sends the uplink signal, to obtain the interference signal. The second UE removes the interference signal from the downlink signal mixed with the interference signal, to obtain the original downlink signal sent by the base station to which the second UE belongs. In this embodiment of the present invention, the second UE may reconstruct the interference signal according to the ICCI received from the first UE, and after reconstruction, the interference signal may be removed from the downlink signal mixed with the interference signal. Therefore, interference caused by an uplink signal sent by UE to receiving of a downlink signal by another UE may be cancelled. In this embodiment of the present invention, there is no need to limit receiving a downlink signal by the second UE serving as a receive end, or limit transmit power used when the first UE serves as a transmit end to send an uplink signal. Therefore, scheduling flexibility and freedom are not limited.

Another first base station provided in an embodiment of the present invention is described below. Referring to FIG. 14, a first base station 1400 includes:
an input apparatus 1401, an output apparatus 1402, a processor 1403, and a memory 1404 (there may be one or more processors 1403 in the first base station 1400, and one processor is used as an example in FIG. 14). In some embodiments of the present invention, the input apparatus 1401, the output apparatus 1402, the processor 1403, and the memory 1404 may be connected by using a bus or in another manner. In FIG. 14, connection by using a bus is used as an example.

The processor 1403 is configured to perform an interference cancellation method performed by the foregoing first base station. Specifically, the processor 1403 is configured to perform the following steps:
broadcasting an ICCI resource set of a cell in which the first base station is located, where the cell in which the first base station is located includes first user equipment UE and second UE; and
receiving an uplink signal sent by the first UE, and sending a downlink signal to the second UE, where the uplink signal sent by the first UE causes interference to receiving of the downlink signal by the second UE.

In some embodiments of the present invention, the processor 1403 is further configured to perform the following step: before broadcasting the ICCI resource set of the cell in which the first base station is located, configuring an indication information resource in the ICCI resource set of the cell in which the first base station is located. The indication information resource is used by the first UE to determine, according to whether to send ICCI, whether to send ICCI indication information on the indication information resource.

In some embodiments of the present invention, the processor 1403 is further configured to perform the following steps:
obtaining, by interacting with a second base station, an ICCI resource set of a cell in which the second base station is located; and
broadcasting the ICCI resource set of the cell in which the second base station is located, so that the second UE blindly detects whether UE included in the cell in which the second base station is located sends ICCI on an ICCI resource in the ICCI resource set of the cell in which the second base station is located.

It can be learned from the description of the present invention in the foregoing embodiment that, the first base station broadcasts the ICCI resource set of the cell in which the first base station is located, and the cell in which the first base station is located includes the first user equipment UE and the second UE. The first base station receives the uplink signal sent by the first UE, and the first base station sends the downlink signal to the second UE. The uplink signal sent by the first UE causes the interference to receiving of the downlink signal by the second UE. The second UE receives the downlink signal and an interference signal mixed in the downlink signal, and then the second UE reconstructs, according to configuration information included in ICCI, the interference caused to the second UE when the first UE sends the uplink signal, to obtain the interference signal. The second UE removes the interference signal from the downlink signal mixed with the interference signal, to obtain an original downlink signal sent by a base station to which the second UE belongs. In this embodiment of the present invention, the second UE may reconstruct the interference signal according to the ICCI received from the first UE, and after reconstruction, the interference signal may be removed from the downlink signal mixed with the interference signal. Therefore, interference caused by an uplink signal sent by UE to receiving of a downlink signal by another UE may be cancelled. In this embodiment of the present invention, there is no need to limit receiving a downlink signal by the second UE serving as a receive end, or limit transmit power used when the first UE serves as a transmit end to send an uplink signal. Therefore, scheduling flexibility and freedom are not limited.

Another second base station provided in an embodiment of the present invention is described below. Referring to FIG. 15, a second base station 1500 includes:
an input apparatus 1501, an output apparatus 1502, a processor 1503, and a memory 1504 (there may be one or more processors 1503 in the second base station 1500, and one processor is used as an example in FIG. 15). In some embodiments of the present invention, the input apparatus 1501, the output apparatus 1502, the processor 1503, and the memory 1504 may be connected by using a bus or in another manner. In FIG. 15, connection by using a bus is used as an example.

The processor 1503 is configured to perform an interference cancellation method performed by the foregoing second base station. Specifically, the processor 1503 is configured to perform the following steps:
obtaining, by interacting with a first base station, an ICCI resource set of a cell in which the first base station is located, where the cell in which the first base station is located includes first user equipment UE, and a cell in which the second base station is located includes second UE;
broadcasting the ICCI resource set of the cell in which the first base station is located; and
sending a downlink signal to the second UE, where when receiving the downlink signal, the second UE receives interference caused to the second UE when the first UE sends an uplink signal.

In some embodiments of the present invention, the processor 1503 is specifically configured to perform the following step:
obtaining, by using an X2 interface between the second base station and the first base station, the ICCI resource set of the cell in which the first base station is located; or obtaining, by using a core network, the ICCI resource set of the cell in which the first base station is located.

In some embodiments of the present invention, the processor 1503 is further configured to perform the following steps:
broadcasting an ICCI resource set of the cell in which the second base station is located, where the cell in which the second base station is located further includes third UE and fourth UE; and
receiving an uplink signal sent by the third UE, and sending a downlink signal to the fourth UE, where the uplink signal sent by the third UE causes interference to receiving of the downlink signal by the fourth UE.

In some embodiments of the present invention, the processor 1503 is further configured to perform the following step: before broadcasting the ICCI resource set of the cell in which the second base station is located, configuring an indication information resource in the ICCI resource set of the cell in which the second base station is located. The indication information resource is used by the third UE to determine, according to whether to send ICCI, whether to send ICCI indication information on the indication information resource.

It can be learned from the description of the present invention in the foregoing embodiment that, the second base station obtains, by interacting with the first base station, the ICCI resource set of the cell in which the first base station is located. The cell in which the first base station is located includes the first UE, and the cell in which the second base station is located includes the second UE. The second base station broadcasts the ICCI resource set of the cell in which the first base station is located. The second base station sends the downlink signal to the second UE, and when receiving the downlink signal, the second UE receives the interference caused to the second UE when the first UE sends the uplink signal. The second UE receives the downlink signal and an interference signal mixed in the downlink signal, and then the second UE reconstructs, according to configuration information included in ICCI, the interference caused to the second UE when the first UE sends the uplink signal, to obtain the interference signal. The second UE removes the interference signal from the downlink signal mixed with the interference signal, to obtain an original downlink signal sent by a base station to which the second UE belongs. In this embodiment of the present invention, the second UE may reconstruct the interference signal according to the ICCI received from the first UE, and after reconstruction, the interference signal may be removed from the downlink signal mixed with the interference signal. Therefore, interference caused by an uplink signal sent by UE to receiving of a downlink signal by another UE may be cancelled. In this embodiment of the present invention, there is no need to limit receiving a downlink signal by the second UE serving as a receive end, or limit transmit power used when the first UE serves as a transmit end to send an uplink signal. Therefore, scheduling flexibility and freedom are not limited.

In addition, it should be noted that the described apparatus embodiments are merely examples. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. In addition, in the accompanying drawings of the apparatus embodiments provided by the present invention, connection relationships between modules indicate that the modules have communication connections with each other. This may be specifically implemented as one or more communications buses or signal cables. Persons of ordinary skill in the art may understand and implement the embodiments of the present invention without creative efforts.

Based on the description of the foregoing implementations, persons skilled in the art may clearly understand that the present invention may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be of various forms, for example, in a form of an analog circuit, a digital circuit, a dedicated circuit, or the like. However, as for the present invention, a software program implementation is a better implementation in most cases. Based on such an understanding, the technical solutions of the present invention essentially or the part contributing to the prior art may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, or the like) to perform the methods described in the embodiments of the present invention.

In conclusion, the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. An interference cancellation method, comprising:
sending, by first user equipment UE, an interference cancellation control message ICCI to second UE by using a device-to-device D2D link, wherein the ICCI comprises information about a configuration used for sending an uplink signal by the first UE; and
sending, by the first UE after sending the ICCI, the uplink signal to a base station to which the first UE belongs, wherein the uplink signal sent by the first UE causes interference to receiving, by the second UE, of a downlink signal sent by a base station to which the second UE belongs.

2. The method according to claim 1, wherein before the sending, by first user equipment UE, an ICCI to second UE by using a device-to-device D2D link, the method further comprises:
receiving, by the first UE by using the D2D link, a reference signal sent by the second UE;
measuring, by the first UE, the reference signal, and determining, according to an obtained measurement result, whether the interference caused by the uplink signal sent by the first UE to receiving, by the second UE, of the downlink signal sent by the base station to which the second UE belongs is greater than a preset interference level; and
if the interference caused by the uplink signal sent by the first UE to receiving, by the second UE, of the downlink signal sent by the base station to which the second UE belongs is greater than the preset interference level, triggering performing of the step of sending, by first user equipment UE, an ICCI to second UE by using a device-to-device D2D link.

3. The method according to claim 1 or 2, wherein the sending, by first user equipment UE, an ICCI to second UE by using a device-to-device D2D link comprises:
receiving, by the first UE, control information sent by the base station to which the first UE belongs; and
sending, by the first UE by using the D2D link, the ICCI to the second UE on an ICCI resource indicated by the control information.

4. The method according to any one of claims 1 to 3, wherein before the sending, by first user equipment UE, an ICCI to second UE by using a device-to-device D2D link, the method further comprises:
sending, by the first UE, ICCI indication information on an indication information resource in an ICCI resource set broadcast by the base station to which the first UE belongs, wherein the ICCI indication information is used by the second UE to determine, according to whether the ICCI indication information is sent on the indication information resource, whether UE other than the second UE sends ICCI on an ICCI resource in the ICCI resource set.

5. An interference cancellation method, comprising:
receiving, by second user equipment UE by using a device-to-device D2D link, an interference cancellation control message ICCI sent by first UE, wherein the ICCI comprises information about a configuration used for sending an uplink signal by the first UE;
receiving, by the second UE, a downlink signal sent by a base station to which the second UE belongs and an interference signal mixed in the downlink signal, wherein the interference signal is interference that is caused to the second UE when the first UE sends the uplink signal and that is received by the second UE when the second UE receives the downlink signal;
reconstructing, by the second UE according to the configuration information comprised in the ICCI, the interference that is caused to the second UE when the first UE sends the uplink signal, to obtain the interference signal; and
removing, by the second UE, the interference signal from the downlink signal mixed with the interference signal, to obtain an original downlink signal sent by the base station to which the second UE belongs.

6. The method according to claim 5, wherein before the receiving, by second user equipment UE by using a device-to-device D2D link, an ICCI sent by first UE, the method further comprises:
sending, by the second UE, a reference signal to the first UE by using the D2D link.

7. The method according to claim 5 or 6, wherein the receiving, by second user equipment UE by using a device-to-device D2D link, an ICCI sent by first UE comprises:
receiving, by the second UE, an ICCI resource set broadcast by the base station to which the second UE belongs; and
blindly detecting, by the second UE, ICCI carried on the D2D link on an ICCI resource in the ICCI resource set.

8. The method according to claim 7, wherein after the receiving, by the second UE, an ICCI resource set broadcast by the base station to which the second UE belongs, the method further comprises:
learning, by the second UE, whether an indication information resource in the ICCI resource set carries ICCI indication information; and
if the indication information resource does not carry the ICCI indication information, determining, by the second UE, that there is no need to blindly detect ICCI carried on the D2D link on an ICCI resource in the ICCI resource set; or if the indication information resource carries the ICCI indication information, triggering the second UE to perform the step of blindly detecting, by the second UE, ICCI carried on the D2D link on an ICCI resource in the ICCI resource set.

9. An interference cancellation method, comprising:
broadcasting, by a first base station, an interference cancellation control message ICCI resource set of a cell in which the first base station is located, wherein the cell in which the first base station is located comprises first user equipment UE and second UE; and
receiving, by the first base station, an uplink signal sent by the first UE, and sending, by the first base station, a downlink signal to the second UE, wherein the uplink signal sent by the first UE causes interference to receiving of the downlink signal by the second UE.

10. The method according to claim 9, wherein before the broadcasting, by a first base station, an interference cancellation control message ICCI resource set of a cell in which the first base station is located, the method further comprises:
configuring, by the first base station, an indication information resource in the ICCI resource set of the cell in which the first base station is located, wherein the indication information resource is used by the first UE to determine, according to whether to send ICCI, whether to send ICCI indication information on the indication information resource.

11. The method according to claim 9 or 10, wherein the method further comprises:
obtaining, by the first base station by interacting with a second base station, an ICCI resource set of a cell in which the second base station is located; and
broadcasting, by the first base station, the ICCI resource set of the cell in which the second base station is located, so that the second UE blindly detects whether UE comprised in the cell in which the second base station is located sends ICCI on an ICCI resource in the ICCI resource set of the cell in which the second base station is located.

12. An interference cancellation method, comprising:
obtaining, by a second base station by interacting with a first base station, an interference cancellation control message ICCI resource set of a cell in which the first base station is located, wherein the cell in which the first base station is located comprises first user equipment UE, and a cell in which the second base station is located comprises second UE;
broadcasting, by the second base station, the ICCI resource set of the cell in which the first base station is located; and
sending, by the second base station, a downlink signal to the second UE, wherein when receiving the downlink signal, the second UE receives interference caused to the second UE when the first UE sends an uplink signal.

13. The method according to claim 12, wherein the obtaining, by a second base station by interacting with a first base station, an interference cancellation control message ICCI resource set of a cell in which the first base station is located comprises:
obtaining, by the second base station by using an X2 interface between the second base station and the first base station, the ICCI resource set of the cell in which the first base station is located; or
obtaining, by the second base station by using a core network, the ICCI resource set of the cell in which the first base station is located.

14. The method according to claim 12 or 13, wherein the method further comprises:
broadcasting, by the second base station, an ICCI resource set of the cell in which the second base station is located, wherein the cell in which the second base station is located further comprises third UE and fourth UE; and
receiving, by the second base station, an uplink signal sent by the third UE, and sending, by the second base station, a downlink signal to the fourth UE, wherein the uplink signal sent by the third UE causes interference to receiving of the downlink signal by the fourth UE.

15. The method according to claim 14, wherein before the broadcasting, by the second base station, an ICCI resource set of the cell in which the second base station is located, the method further comprises:
configuring, by the second base station, an indication information resource in the ICCI resource set of the cell in which the second base station is located, wherein the indication information resource is used by the third UE to determine, according to whether to send ICCI, whether to send ICCI indication information on the indication information resource.

16. User equipment UE, wherein the UE is specifically first UE, there is a device-to-device D2D link between the first UE and second UE, and the first UE comprises:
an ICCI sending module, configured to send an interference cancellation control message ICCI to the second UE by using the D2D link, wherein the ICCI comprises information about a configuration used for sending an uplink signal by the first UE; and
an uplink signal sending module, configured to: after the ICCI sending module sends the ICCI, send the uplink signal to a base station to which the first UE belongs, wherein the uplink signal sent by the first UE causes interference to receiving, by the second UE, of a downlink signal sent by a base station to which the second UE belongs.

17. The user equipment according to claim 16, wherein the first UE further comprises a measurement module, configured to: before the ICCI sending module sends the ICCI to the second UE by using the device-to-device D2D link, receive, by using the D2D link, a reference signal sent by the second UE; measure the reference signal; determine, according to an obtained measurement result, whether the interference caused by the uplink signal sent by the first UE to receiving, by the second UE, of the downlink signal sent by the base station to which the second UE belongs is greater than a preset interference level; and trigger performing of the ICCI sending module if the interference caused by the uplink signal sent by the first UE to receiving, by the second UE, of the downlink signal sent by the base station to which the second UE belongs is greater than the preset interference level.

18. The user equipment according to claim 16 or 17, wherein the ICCI sending module comprises:
a receiving submodule, configured to receive control information sent by the base station to which the first UE belongs; and
a sending submodule, configured to send, by using the D2D link, the ICCI to the second UE on an ICCI resource indicated by the control information.

19. The user equipment according to any one of claims 16 to 18, wherein the ICCI sending module is further configured to: before sending the ICCI to the second UE by using the device-to-device D2D link, send ICCI indication information on an indication information resource in an ICCI resource set broadcast by the base station to which the first UE belongs, wherein the ICCI indication information is used by the second UE to determine, according to whether the ICCI indication information is sent on the indication information resource, whether UE other than the second UE sends ICCI on an ICCI resource in the ICCI resource set.

20. User equipment UE, wherein the UE is specifically second UE, there is a device-to-device D2D link between the second UE and first UE, and the second UE comprises:
an ICCI receiving module, configured to receive, by using the D2D link, an interference cancellation control message ICCI sent by the first UE, wherein the ICCI comprises information about a configuration used for sending an uplink signal by the first UE;
a signal receiving module, configured to receive a downlink signal sent by a base station to which the second UE belongs and an interference signal mixed in the downlink signal, wherein the interference signal is interference that is caused to the second UE when the first UE sends the uplink signal and that is received by the second UE when the second UE receives the downlink signal;
an interference reconstruction module, configured to reconstruct, according to the configuration information comprised in the ICCI, the interference that is caused to the second UE when the first UE sends the uplink signal, to obtain the interference signal; and
a signal restoration module, configured to remove the interference signal from the downlink signal mixed with the interference signal, to obtain an original downlink signal sent by the base station to which the second UE belongs.

21. The user equipment according to claim 20, wherein the second UE further comprises a signal sending module, configured to: before the ICCI receiving module receives, by using the D2D link, the ICCI sent by the first UE, send a reference signal to the first UE by using the D2D link.

22. The user equipment according to claim 20 or 21, wherein the ICCI receiving module comprises:
a receiving submodule, configured to receive an ICCI resource set broadcast by the base station to which the second UE belongs; and
a detection submodule, configured to blindly detect ICCI carried on the D2D link on an ICCI resource in the ICCI resource set.

23. The user equipment according to claim 22, wherein the ICCI receiving module further comprises a learning submodule, configured to: after the receiving submodule receives the ICCI resource set broadcast by the base station to which the second UE belongs, learn whether an indication information resource in the ICCI resource set carries ICCI indication information; and if the indication information resource does not carry the ICCI indication information, determine that there is no need to blindly detect ICCI carried on the D2D link on an ICCI resource in the ICCI resource set; or trigger performing of the detection submodule if the indication information resource carries the ICCI indication information.

24. A base station, wherein the base station is a first base station, and the first base station comprises:
a broadcast module, configured to broadcast an interference cancellation control message ICCI resource set of a cell in which the first base station is located, wherein the cell in which the first base station is located comprises first user equipment UE and second UE;
a receiving module, configured to receive an uplink signal sent by the first UE; and
a sending module, configured to send a downlink signal to the second UE when the receiving module receives the uplink signal sent by the first UE, wherein the uplink signal sent by the first UE causes interference to receiving of the downlink signal by the second UE.

25. The base station according to claim 24, wherein the first base station further comprises a configuration module, configured to: before the broadcast module broadcasts the ICCI resource set of the cell in which the first base station is located, configure an indication information resource in the ICCI resource set of the cell in which the first base station is located, wherein the indication information resource is used by the first UE to determine, according to whether to send ICCI, whether to send ICCI indication information on the indication information resource.

26. The base station according to claim 24 or 25, wherein the first base station further comprises an interaction module;
the interaction module is configured to obtain, by interacting with a second base station, an ICCI resource set of a cell in which the second base station is located; and
the broadcast module is further configured to broadcast the ICCI resource set of the cell in which the second base station is located, so that the second UE blindly detects whether UE comprised in the cell in which the second base station is located sends ICCI on an ICCI resource in the ICCI resource set of the cell in which the second base station is located.

27. A base station, wherein the base station is specifically a second base station, and the second base station comprises:
an interaction module, configured to obtain, by interacting with a first base station, an interference cancellation control message ICCI resource set of a cell in which the first base station is located, wherein the cell in which the first base station is located comprises first user equipment UE, and a cell in which the second base station is located comprises second UE;
a broadcast module, configured to broadcast the ICCI resource set of the cell in which the first base station is located; and
a sending module, configured to send a downlink signal to the second UE, wherein when receiving the downlink signal, the second UE receives interference caused to the second UE when the first UE sends an uplink signal.

28. The base station according to claim 27, wherein the interaction module is specifically configured to: obtain, by using an X2 interface between the second base station and the first base station, the ICCI resource set of the cell in which the first base station is located; or obtain, by using a core network, the ICCI resource set of the cell in which the first base station is located.

29. The base station according to claim 27 or 28, wherein the base station further comprises a receiving module;
the broadcast module is further configured to broadcast an ICCI resource set of the cell in which the second base station is located, wherein the cell in which the second base station is located further comprises third UE and fourth UE;
the receiving module is configured to receive an uplink signal sent by the third UE; and
the sending module is further configured to send a downlink signal to the fourth UE when the receiving module receives the uplink signal sent by the third UE, wherein the uplink signal sent by the third UE causes interference to receiving of the downlink signal by the fourth UE.

30. The base station according to claim 29, wherein the second base station further comprises a configuration module, configured to: before the broadcast module broadcasts the ICCI resource set of the cell in which the second base station is located, configure an indication information resource in the ICCI resource set of the cell in which the second base station is located, wherein the indication information resource is used by the third UE to determine, according to whether to send ICCI, whether to send ICCI indication information on the indication information resource.
